# EUROPEAN PATENT APPLICATION

(11) **EP 4 629 007 A1**
(43) Date of publication of application: **08.10.2025**
(21) Application number: 25161877.3
(22) Date of filing: 05.03.2025
(51) Int. Cl.: G05B 19/418, G06Q 10/0639

(54) **INFORMATION PROVIDING APPARATUS, INFORMATION PROVIDING METHOD, AND INFORMATION PROVIDING PROGRAM**

(30) Priority: 08.03.2024 JP 2024036332
(71) Applicant: Yokogawa Electric Corporation, Tokyo 180-8750 (JP)
(72) Inventor: SEKI, Tatenobu, Musashino-shi, Tokyo, 180-8750, (JP); HIROTANI, Kazutaka, Musashino-shi, Tokyo, 180-8750, (JP); EMA, Nobuaki, Musashino-shi, Tokyo, 180-8750, (JP)
(74) Representative: Winter, Brandl - Partnerschaft mbB

(57) **Abstract**

A server device (10) acquires operation data for identifying operation that is performed on a controller (30) by a worker (W) in accordance with a work instruction on a predetermined work process related to the controller (30) that is operated by the worker (W), analyzes the operation data, determines a notification content for the worker (W), and notifies the worker (W) of the determined notification content.

## Description

### FIELD

The present invention relates to an information providing apparatus, an information providing method, and an information providing program.

### BACKGROUND

In a production plant, most of controllers in each of which a Programmable Logic Controller (PLC) or the like is incorporated are operated by installed operation panels of touch monitor types, and are independent without being connected to a network. A worker who operates the controllers that are not connected to the network need to operate the operation panels of the touch monitor types in the respective controllers.

Patent Literature 1: Japanese Unexamined Patent Application Publication No. 2002-041124 Patent Literature 2: Japanese Unexamined Patent Application Publication No. 2014-071683

However, in the conventional technology, it is difficult to connect pieces of information on apparatuses without physically modifying the apparatuses to connect each of the apparatuses to a network. For example, in the conventional technology, a worker who operates a controller that is not connected to a network in a production plant need to check, in advance, Standard Operation Procedure (SOP) of each of products, and perform manual operation.

The present invention has been conceived in view of the foregoing situations, and an object of the present invention is to connect pieces of information on apparatuses without physically modifying the apparatuses to connect each of the apparatuses to a network.

### SUMMARY

According to an aspect of the embodiments, an information providing apparatus includes an acquisition unit that acquires operation data for identifying operation that is performed on an operation device by a worker in accordance with a work instruction on a predetermined work process related to the operation device that is operated by the worker, an analysis unit that analyzes the operation data and determines a notification content for the worker, and a notification unit that notifies the worker of the determined notification content.

According to an aspect of the embodiments, an information providing method that is implemented by a computer, the information providing method includes acquiring operation data for identifying operation that is performed on an operation device by a worker in accordance with a work instruction on a predetermined work process related to the operation device that is operated by the worker, analyzing the operation data, determining a notification content for the worker, and notifying the worker of the determined notification content.

According to an aspect of the embodiments, an information providing program that causes a computer to execute a process, the process includes acquiring operation data for identifying operation that is performed on an operation device by a worker in accordance with a work instruction on a predetermined work process related to the operation device that is operated by the worker, analyzing the operation data, determining a notification content for the worker, and notifying the worker of the determined notification content.

### BRIEF DESCRIPTION OF THE DRAWINGS

FIG. 1 is a diagram illustrating a configuration example and a process example of a work management system according to one embodiment;
FIG. 2 is a block diagram illustrating a configuration example of each of apparatuses in the work management system according to one embodiment;
FIG. 3 is a diagram illustrating an example of an instruction data storage unit of a server device according to one embodiment;
FIG. 4 is a diagram illustrating an example of an operation data storage unit of the server device according to one embodiment;
FIG. 5 is a diagram illustrating an example of an analysis result storage unit of the server device according to one embodiment;
FIG. 6 is a diagram illustrating an example of a work report storage unit of the server device according to one embodiment;
FIG. 7 is a diagram illustrating a specific example of a display screen of a worker terminal according to one embodiment;
FIG. 8 is a diagram illustrating a specific example of a display screen of a controller according to one embodiment;
FIG. 9 is a flowchart illustrating an example of the entire flow of the work management system according to one embodiment;
FIG. 10 is a flowchart illustrating an example of the flow of a work instruction notification process of the work management system according to one embodiment;
FIG. 11 is a flowchart illustrating an example of the flow of an operation data acquisition process of the work management system according to one embodiment;
FIG. 12 is a flowchart illustrating an example of an operation data analysis process of the work management system according to one embodiment;
FIG. 13 is a flowchart illustrating an example of the flow of a work report generation process of the work management system according to one embodiment;
FIG. 14 is a diagram illustrating a configuration example and a process example of a work management system according to a first modification of one embodiment;
FIG. 15 is a diagram illustrating a specific example of a display screen of smart glasses according to the first modification of one embodiment;
FIG. 16 is a diagram illustrating a configuration example and a process example of a work management system according to a second modification of one embodiment;
FIG. 17 is a diagram illustrating a configuration example and a process example of a work management system according to a third modification of one embodiment;
FIG. 18 is a diagram illustrating a configuration example of a work management system according to a fourth modification of one embodiment; and
FIG. 19 is a diagram for explaining a hardware configuration example according to one embodiment;

### DETAILED DESCRIPTION OF THE PREFERRED EMBODIMENTS

Embodiments of an information providing apparatus, an information providing method, and an information providing program according to the present invention will be described in detail below with reference to the drawings. The present invention is not limited by the embodiments described below.

A configuration and a process of a work management system 100 according to one embodiment, a configuration and a process of each of apparatuses in the work management system 100, flows of processes of the work management system 100, modifications and application examples of one embodiment, and effects of one embodiment will be described below. Meanwhile, in one embodiment, a work site of a production plant will be described as one example, but a field of use is not specifically limited. For example, embodiments are applicable to an environment in which an operation apparatus that is an apparatus to be operated by a worker W and that is not connected to a network is present.

### 1. Configuration and process of work management system 100

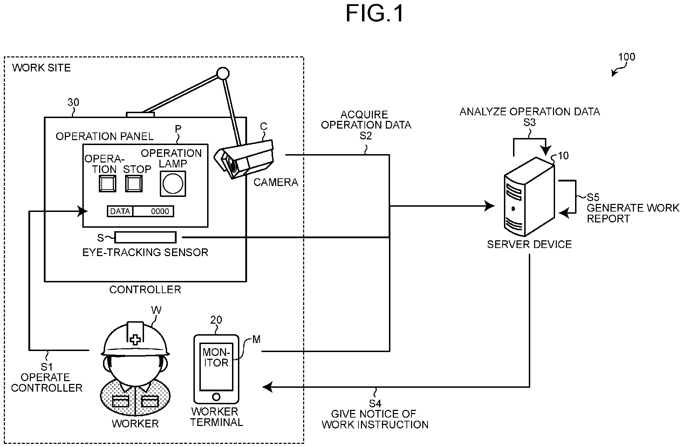

A configuration and a process of the work management system 100 according to one embodiment will be described in detail below with reference to FIG. 1. FIG. 1 is a diagram illustrating a configuration example and a process example of the work management system 100 according to one embodiment. In the following, an entire configuration example of the work management system 100, a process example of the work management system 100, and an effect of the work management system 100 will be described.

### 1-1. Entire configuration example of work management system 100

The work management system 100 includes a server device 10, a worker terminal 20, and a controller 30. Here, the server device 10 and the worker terminal 20 are communicably connected to each other in a wired or wireless manner via a predetermined communication network (not illustrated). Meanwhile, it is possible to adopt, as the predetermined communication network, various kinds of communication networks, such as the Internet or a dedicated line.

### 1-1-1. Server device 10

The server device 10 is an information providing apparatus that gives a work instruction to a worker W and generates a work report. For example, the server device 10 is implemented by a cloud environment, an on-premise environment, an edge environment, or the like. Meanwhile, the work management system 100 illustrated in FIG. 1 may include the plurality of server devices 10.

### 1-1-2. Worker terminal 20

The worker terminal 20 is an example of an apparatus that is operated by the worker W and that is connected to the network. In the example illustrated in FIG. 1, the worker terminal 20 is a terminal that is carried by the worker W in a work site of a production plant, is implemented by a tablet terminal, a smartphone, or the like, and includes a monitor M that displays the work instruction. Meanwhile, the work management system 100 illustrated in FIG. 1 may include the plurality of worker terminals 20.

### 1-1-3. Controller 30

The controller 30 is an example of a device (operation device) that is operated by the worker W and that is not connected to the network. In the example illustrated in FIG. 1, the controller 30 is an apparatus that is operated by the worker W in a work site of a production plant and is an apparatus that controls a control target apparatus (for example, a tank, a pump, or a conveyor) in the production plant. The controller 30 includes an operation panel P that receives operation performed by the worker W.

### 1-1-4. Camera C

The camera C is an image capturing device that captures an image of the operation panel P of the controller 30, and is installed at a location at which the image of the operation panel P can be captured around the controller 30. Here, the server device 10 and the camera C are communicably connected to each other in a wired or wireless manner via a predetermined communication network (not illustrated).

### 1-1-5. Eye-tracking sensor S

An eye-tracking sensor S is a sensor device that detects a line of sight of the worker W, and is installed at a location at which the line of sight of the worker W is detectable around the controller 30. Here, the server device 10 and the eye-tracking sensor S are communicably connected to each other in a wired or wireless manner via a predetermined communication network (not illustrated).

### 1-2. Example of overall process of work management system 100

An overall process performed by the work management system 100 as described above will be described. Meanwhile, processes from Step S1 to Step S5 below may be performed in a different order. Further, any of the processes from Step S1 to Step S5 below may be omitted.

### 1-2-1. Device operation process

Firstly, the worker W operates the controller 30 (Step S1). For example, the worker W operates the operation panel P based on the SOP. Further, the worker W performs a manual work, such as raw material input, and a work, such as data recording or data check during automatic control on the controller 30.

### 1-2-2. Operation data acquisition process

Secondly, the server device 10 acquires operation data (Step S2). For example, the server device 10 acquires, as the operation data, image data of the operation panel P that is captured by the camera C, line-of-sight data of the worker W that is detected by the eye-tracking sensor S, location data of the worker W that is detected by the worker terminal 20, or the like.

### 1-2-3. Operation data analysis process

Thirdly, the server device 10 analyzes the operation data (Step S3). For example, when a work process is operation of the operation panel P, the server device 10 analyzes the image data of the operation panel P and determines whether or not the worker W has operated the operation panel P correctly. In this case, the server device 10 determines appropriateness of the operation of the worker W based on layout information on the operation screen of the operation panel P or information on reply, transition, or the like at the time of pressing a button of the operation panel P.

Further, when the work process is the data recording, the server device 10 analyzes the eye-tracking data of the worker W and records characters in the operation panel P that is viewed by the worker W. In this case, the server device 10 identifies a region of the operation panel P that is in the line of sight of the worker W, performs an Optical Character Recognition (OCR) process on image data of the operation panel P that is included in the identified region, and identifies the characters in the operation panel P that is viewed by the worker W. Furthermore, it may be possible to directly perform the OCR process on the image data of the operation panel P and identify the characters in the operation panel P without using the eye-tracking data of the worker W that is detected by the eye-tracking sensor S.

Moreover, the server device 10 is able to analyze the location data of the worker W and determine whether or not the worker W operates the correct controller 30.

Furthermore, the server device 10 determines a notification content based on an analysis result of the operation data. For example, when determining that the worker W has performed correct operation, the server device 10 determines a second work instruction as the notification content. In contrast, when determining that the worker W has performed incorrect operation, the server device 10 determines an error message as the notification content. Moreover, when determining that the worker W has performed incorrect operation, the server device 10 may determine a changed work instruction as the notification content.

### 1-2-4. Work instruction notification process

Fourthly, the server device 10 notifies the worker W of the second work instruction (Step S4). For example, when determining that the worker W has performed correct operation at Step S3 as described above, the server device 10 transmits a next work instruction among work processes that are generated based on the SOP to the worker terminal 20, and displays the work instruction on the monitor M of the worker terminal 20.

In this case, the server device 10 notifies the worker W of, as the work instruction, an instruction on operation of the operation panel P that is operation on the controller 30, an instruction on a manual work, such as raw material input, an instruction on data recording, or the like. Further, the worker terminal 20 may display a flowchart that indicates a work instruction of each of work processes, and display a work instruction that is being carried out in a highlighted manner. Furthermore, the worker terminal 20 may display a list of the work instructions of all of the work processes, and display a work instruction that is being carried out in a highlighted manner.

In contrast, when determining that the worker W has performed incorrect operation at Step S3 as described above, the server device 10 gives a notice of the error message, the changed work instruction, or the like.

The processes from Step S1 to Step S4 as described above are repeated until all of the work processes that are performed by the controller 30 are completed. Meanwhile, in the processes from Step S1 to Step S4 as described above, the worker W is notified of the work instruction on the next work process after an operation data process at Step S3, but it may be possible to notify the worker W of a work instruction of a work process to be next performed before a device operation process at Step S1. Furthermore, in a work instruction notification process at Step S4 as described above, it may be possible not to give a notice of the work instruction when determining that the worker W has performed correct operation, and it may be possible to give a notice of the error message, the changed work instruction, or the like when determining that the worker W has performed incorrect operation.

### 1-2-5. Work report generation process

Fifthly, the server device 10 generates a work report (Step S5). For example, when all of the work processes that are performed by the controller 30 are completed, the server device 10 generates a work report that includes an identification number of the controller 30, a name of the worker W, a work content, recorded data, or the like.

### 1-3. Effect of work management system 100

In the following, an overview and a problem with a work management system 100P according to a reference technology will be described, and thereafter, an effect of the work management system 100 will be described.

### 1-3-1. Overview of work management system 100P

An overview of the work management system 100P according to the reference technology will be described. In the work management system 100P, in a production plant, the controller 30 in which a PLC or the like is incorporated is operated by the installed operation panel P of a touch monitor type, and is independent without being connected to a network. Therefore, in the work management system 100P, in the production plant that includes the controller 30 that is not connected to the network, the worker W who operates the controller 30 needs to operate the operation panels P in the respective controllers 30.

### 1-3-2. Problems with work management system 100P

Problems with the work management system 100P the reference technology will be described. The work management system 100P has first to fourth problems as described below.

### 1-3-2-1. First problem

In the work management system 100P, for example, as for a batch process in a production plant, because it is needed to manufacture various types of products, manufacturing procedures for the respective products are different and are not routine works. Therefore, in the work management system 100P, the worker W needs to check the SOP for each of the products in advance and then perform manual operation.

### 1-3-2-2. Second problem

In the work management system 100P, work record, record of measurement values, and the like are performed by manual work by writing by hand on paper. Therefore, in the work management system 100P, data is not digitalized and data utilization has not progressed.

### 1-3-2-3. Third problem

In the work management system 100P, to collect digital data, a system modification is needed to connect each of the controllers 30 to a network. However, to perform the modification as described above on existing facilities in the work management system 100P, it is needed to obtain PLC information from a PLC vendor who has performed engineering on the PLC and the controllers 30, and even products of the same PLC vendor may have different specifications depending on series. Accordingly, the above-described modification of the work management system 100P needs a large amount of period and cost and imposes a burden on the work site, and therefore, it is difficult for a small-scale apparatus manufacturer, a customer, or the like to perform the modifications.

### 1-3-2-4. Fourth problem

In the work management system 100P, some of the controllers 30 may include, inside thereof, black boxes including know-how or the like of the apparatus manufacturer. Therefore, a system modification for connecting each of the controllers 30 in the work management system 100P to a network has a problem in terms of confidentiality because the system modification includes installation of an electronic interface with an external apparatus.

### 1-3-3. Overview of work management system 100

An overview of the work management system 100 according to one embodiment will be described. The work management system 100 performs processes as described below. In the following, overviews of a device operation process, an operation data acquisition process, an operation data analysis process, a work instruction notification process, and a work report generation process will be described.

### 1-3-3-1. Device operation process

Firstly, the worker W operates the controller 30. In this case, the worker W performs a certain work, such as operation on the operation panel P, a manual work, data recording, or a check of data of the controller 30, for example.

### 1-3-3-2. Operation data acquisition process

Secondly, the server device 10 acquires operation data. In this case, the server device 10 acquires, as the operation data, image data of the operation panel P that is captured by the camera C, eye-tracking data of the worker W that is detected by the eye-tracking sensor S, or location data of the worker W that is detected by the worker terminal 20, for example.

### 1-3-3-3. Operation data analysis process

Thirdly, the server device 10 analyzes the operation data. In this case, the server device 10 analyzes the image data of the operation panel P and determines whether or not the worker W has correctly operated the operation panel P, for example. Further, the server device 10 analyzes the eye-tracking data of the worker W and records data of the operation panel P that is in the line of sight of the worker W, for example. Furthermore, the server device 10 may also analyze the location data of the worker W and determines whether or not the worker W is operating the correct controller 30, for example. Then, the server device 10 determines a notification content based on an analysis result of the operation data.

### 1-3-3-4. Work instruction notification process

Fourthly, the server device 10 notifies the worker W of the work instruction. In this case, when determining that the worker W has performed correct operation, the server device 10 transmits a next work instruction among the work processes that are generated based on the SOP to the worker terminal 20, and displays the work instruction on the monitor M of the worker terminal 20, for example. In contrast, when determining that the worker W has performed incorrect operation, the server device 10 gives a notice of the error message, the changed work instruction, or the like, for example.

### 1-3-3-5. Work report generation process

Fifthly, the server device 10 generates a work report. In this case, when all of the work processes that are performed by the controller 30 are completed, the server device 10 generates a work report that indicates a work status, for example.

### 1-3-4. Effects of the work management system 100

Effects of the work management system 100 according to one embodiment will be described below. In the work management system 100, as will be described in a first effect to a fourth effect below, it is possible to connect pieces of information on apparatuses (for example, data collaboration, centralized data management, data integration, or translation of data) without physically modifying the apparatuses to connect each of the apparatuses to a network.

### 1-3-4-1. First effect

In the work management system 100, the server device 10 is able to notify the worker W of the work instruction that is generated based on the SOP even in an environment in which the controller 30 is not connected to a network. Furthermore, in the work management system 100, the server device 10 is able to give a notice of the error message when the worker W has performed incorrect operation.

### 1-3-4-2. Second effect

In the work management system 100, even in an environment in which the controller 30 is not connected to a network, it is possible to digitalize data that is used for work record, record of measurement data, or the like, so that it is possible to expect data utilization.

### 1-3-4-3. Third effect

In the work management system 100, even in an environment in which the controller 30 is not connected to a network, it is not needed to perform a system modification for connecting each of the controllers 30 to a network, so that a modification period, a modification cost, a burden on the work site, or the like is not needed.

### 1-3-4-4. Fourth effect

In the work management system 100, even when a production plant or the like includes the controller 30 that is black-boxed, it is not needed to connect to a network, so that it is possible to ensure reliability in terms of confidentiality.

### 2. Configuration and process of each of apparatuses in work management system 100

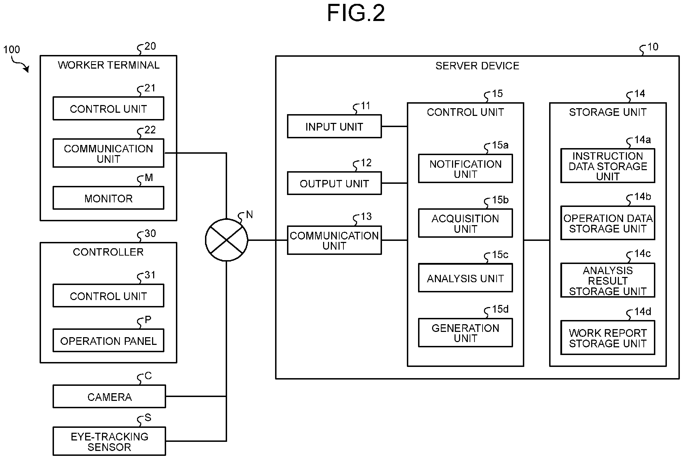

A configuration and a process of each of the apparatuses that are included in the work management system 100 illustrated in FIG. 1 will be described below with reference to FIG. 2 to FIG. 8. In the following, an entire configuration example and a process example of the work management system 100 according to one embodiment will be first described, and thereafter, a configuration example and a process example of the server device 10, a configuration example and a process example of the worker terminal 20, and a configuration example and a process example of the controller 30 will be described in detail.

### 2-1. Entire configuration example of work management system 100

An entire configuration example of the work management system 100 illustrated in FIG. 1 will be described with reference to FIG. 2. FIG. 2 is a block diagram illustrating a configuration example of each of the apparatuses that are included in the work management system 100 according to one embodiment. As illustrated in FIG. 2, the work management system 100 includes the server device 10, the worker terminal 20, and the controller 30. Furthermore, the server device 10 and the worker terminal 20 are communicably connected to each other by a communication network N, such as the Internet or a dedicated line.

The server device 10 is installed in a cloud environment, an on-premise environment, an edge environment, or the like. Further, the worker terminal 20 is carried by the worker W. Furthermore, the controller 30 is installed in a work site of a production plant or the like.

### 2-2. Configuration example and process example of server device 10

A configuration example and a process example of the server device 10 will be described with reference to FIG. 2. The server device 10 is an information providing apparatus and includes an input unit 11, an output unit 12, a communication unit 13, a storage unit 14, and a control unit 15.

### 2-2-1. Input unit 11

The input unit 11 controls input of various kinds of information to the server device 10. For example, the input unit 11 is implemented by a mouse, a keyboard, or the like, and receives input of various kinds of information to the server device 10.

### 2-2-2. Output unit 12

The output unit 12 controls output of various kinds of information from the server device 10. For example, the output unit 12 is implemented by a display or the like, and displays various kinds of information that are stored in the server device 10.

### 2-2-3. Communication unit 13

The communication unit 13 controls data communication with a different apparatus. For example, the communication unit 13 performs data communication with each of the communication apparatuses via a router or the like. Further, the communication unit 13 is able to perform data communication with a terminal or the like (not illustrated).

### 2-2-4. Storage unit 14

The storage unit 14 stores therein various kinds of information that are referred to when the control unit 15 operates, or various kinds of information that are acquired when the control unit 15 operates. The storage unit 14 stores therein an instruction data storage unit 14a, an operation data storage unit 14b, an analysis result storage unit 14c, and a work report storage unit 14d. Here, the storage unit 14 may be implemented by, for example, a semiconductor memory device, such as a Random Access Memory (RAM) or a flash memory, or a storage device, such as a hard disk or an optical disk. Meanwhile, in the example illustrated in FIG. 2, the storage unit 14 is arranged inside the server device 10, but may be arranged outside the server device 10, or it may be possible to arrange a plurality of storage units.

### 2-2-4-1. Instruction data storage unit 14a

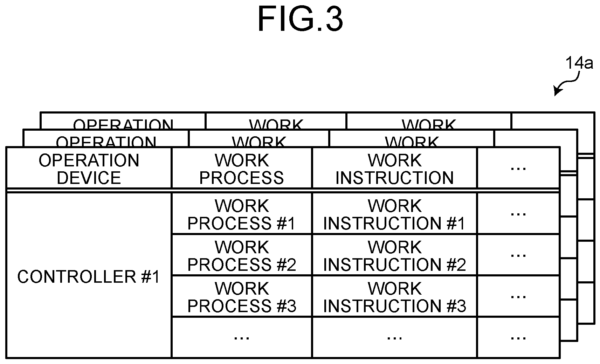

The instruction data storage unit 14a stores therein instruction data. For example, the instruction data storage unit 14a stores therein instruction data that includes a work instruction that is transmitted by a notification unit 15a of the control unit 15 (to be described later). An example of the data that is stored in the instruction data storage unit 14a will be described below with reference to FIG. 3. FIG. 3 is a diagram illustrating an example of the instruction data storage unit 14a of the server device 10 according to one embodiment. In the example illustrated in FIG. 3, the instruction data storage unit 14a includes items of an "operation device", a "work process", and a "work instruction".

The "operation device" indicates identification information for identifying an operation device that is operated by the worker W and that is not connected to a network, and is, for example, an identification number or an identification symbol of the controller 30. Here, the "operation device" may be a robot that includes the operation panel P or a moving object, such as a vehicle or a bicycle, rather than the controller 30, and is not specifically limited. The "work process" indicates each of steps of a work that includes single operation or a series of operation that is performed by the worker W in relation to the operation device, and is, for example, each of steps of a work that is performed by the worker W in relation to the controller 30. The "work instruction" is an instruction for the worker W on a work that includes single operation or a series of operation that is performed by the worker W in relation to the operation device, and is, for example, a "manual work instruction", such as raw material input with respect to a tank that is controlled by the controller 30, a "screen operation instruction", such as operation on the operation panel P of the controller 30, "automatic control display", such as data monitoring during automatic control on the controller 30, a "data recording instruction", such as record of measurement data of the operation panel P of the controller 30, a "control start instruction", such as start of operation of the controller 30, a "control interruption instruction, such as interruption of operation of the controller 30, or a "control termination instruction", such as termination of operation of the controller 30.

Specifically, FIG. 3 illustrates an example in which, with respect to the controller 30 that is identified by a "controller #1", data, such as {work process: "work process #1", work instruction: "work instruction #1"}, {work process: "work process #2", work instruction: "work instruction #2"}, and {work process: "work process #3", work instruction: "work instruction #3"}, is stored in the instruction data storage unit 14a.

Meanwhile, the instruction data storage unit 14a may store therein, operation permission (access right) on each of the controllers 30 or a work instruction.

### 2-2-4-2. Operation data storage unit 14b

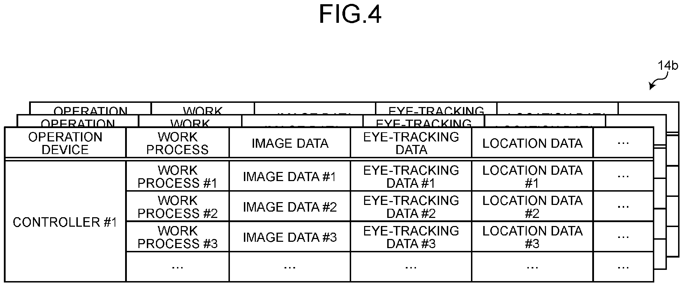

The operation data storage unit 14b stores therein operation data. For example, the operation data storage unit 14b stores therein operation data that is acquired by an acquisition unit 15b of the control unit 15 (to be described later) and that is analyzed by an analysis unit 15c. An example of the data that is stored in the operation data storage unit 14b will be described below with reference to FIG. 4. FIG. 4 is a diagram illustrating an example of the operation data storage unit 14b of the server device 10 according to one embodiment. In the example illustrated in FIG. 4, the operation data storage unit 14b includes items of an "operation device", a "work process", "image data", "eye-tracking data", and "location data".

The "operation device" indicates identification information for identifying an operation device that is operated by the worker W and that is not connected to a network, and is, for example, an identification number or an identification symbol of the controller 30. The "work process" indicates each of steps of a work that includes single operation or a series of operation that is performed by the worker W in relation to the operation device, and is, for example, each of steps of a work that is performed by the worker W in relation to the controller 30. The "image data" is data for identifying a state of an operation screen of the operation device, and is, for example, still image data or moving image data of the operation panel P that is captured by the camera C that is arranged in the controller 30. The "eye-tracking data" is data for identifying a line of sight of the worker W with respect to the operation screen of the operation device, and is, for example, coordinate data that indicates a region on the operation panel P that is detected by the eye-tracking sensor that is arranged in the controller 30. The "location data" is data for identifying a location of the worker W who operates the operation device, and is, for example, coordinate data that indicates the location of the worker W in a production plant that is detected by a Global Positioning System (GPS) serving as a location sensor that is incorporated in the worker terminal 20.

Specifically, FIG. 4 illustrates an example in which, with respect to the controller 30 that is identified by the "controller #1", data, such as {work process: "work process #1", image data: "image data #1", eye-tracking data: "eye-tracking data #1"}, {work process: "work process #2", image data: "image data #2", eye-tracking data: "eye-tracking data #2"}, and {work process: "work process #3", image data: "image data #3", eye-tracking data: "eye-tracking data #3"}, is stored in the operation data storage unit 14b. Further, an example is illustrated in which, with respect to the worker W who operates the controller 30 that is identified by the "controller #1", data, such as {work process: "work process #1", location data: "location data #1"}, {work process: "work process #2", location data: "location data #2"}, and {work process: "work process #3", location data: "location data #3"}, is stored in the operation data storage unit 14b.

### 2-2-4-3. Analysis result storage unit 14c

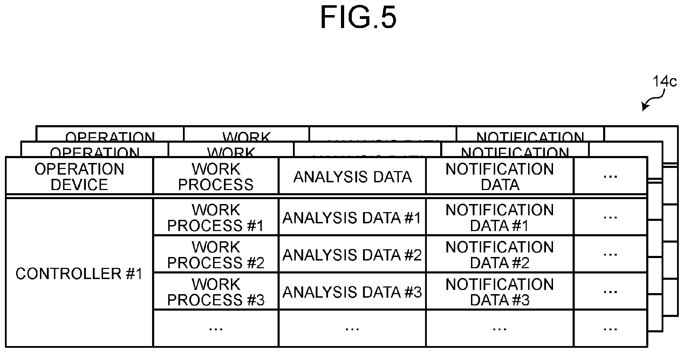

The analysis result storage unit 14c stores therein an analysis result. For example, the analysis result storage unit 14c stores therein an analysis result that is output by the analysis unit 15c of the control unit 15 (to be described later). An example of the data that is stored in the analysis result storage unit 14c will be described below with reference to FIG. 5. FIG. 5 is a diagram illustrating an example of the analysis result storage unit 14c of the server device 10 according to one embodiment. **In** the example illustrated in FIG. 5, the analysis result storage unit 14c includes items of an "operation device", a "work process", "analysis data", and "notification data".

The "operation device" indicates identification information for identifying an operation device that is operated by the worker W and that is not connected to a network, and is, for example, an identification number or an identification symbol of the controller 30. The "work process" indicates each of steps of a work that includes single operation or a series of operation that is performed by the worker W in relation to the operation device, and is, for example, each of steps of a work that is performed by the worker W in relation to the controller 30. The "analysis data" indicates operation on the operation device that is performed by the worker W and that is identified from the operation data or a result of the operation, and is, for example, input operation that is performed on the operation panel P of the controller 30 by the worker W in accordance with a work instruction and appropriateness of the input operation, viewing operation that is performed on the operation panel P of the controller 30 by the worker W in accordance with a work instruction and character data in a viewed region in the operation panel P, moving operation that is performed on the operation panel P of the controller 30 by the worker W in accordance with a work instruction and appropriateness of the moving operation, or the like. The "notification data" is sentence data that indicates a notification content that is given to the worker W and that is determined by using the "analysis data", and is, for example, a work normal message indicating that the worker W has performed correct operation, a work abnormal message (error message) indicating that the worker W has performed incorrect operation or the worker W has performed operation on the incorrect controller 30, a work change message indicating that a work that is performed by the worker W is changed, or the like.

Specifically, FIG. 5 illustrates an example in which, with respect to the controller 30 that is identified by the "controller #1", data, such as {work process: "work process #1", analysis data: "analysis data #1", notification data: "notification data #1"}, {work process: "work process #2", analysis data: "analysis data #2", notification data: "notification data #2"}, and {work process: "work process #3", analysis data: "analysis data #3", notification data: "notification data #3"}, is stored in the analysis result storage unit 14c.

### 2-2-4-4. Work report storage unit 14d

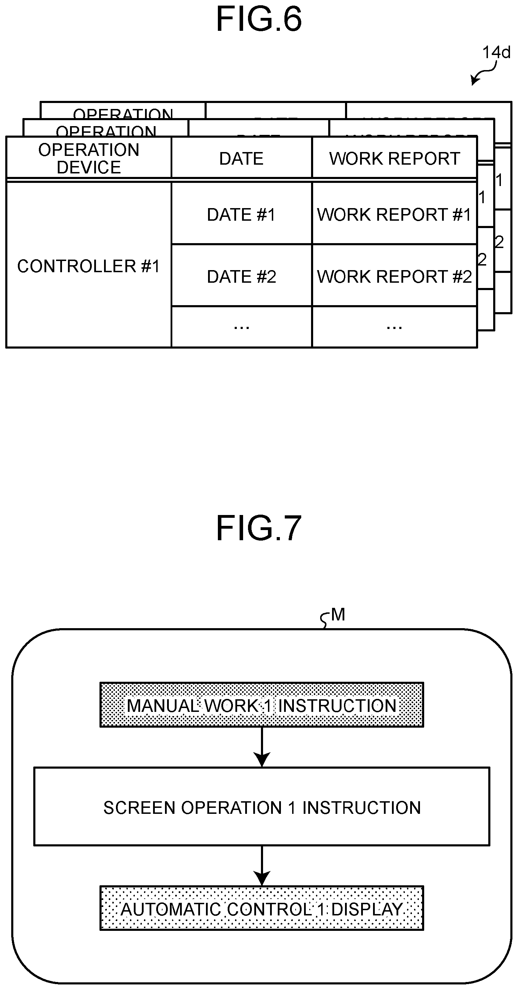

The work report storage unit 14d stores therein a work report. For example, the work report storage unit 14d stores therein a work report that is generated by a generation unit 15d of the control unit 15 (to be described later). An example of the data that is stored in the work report storage unit 14d will be described below with reference to FIG. 6. FIG. 6 is a diagram illustrating an example of the work report storage unit 14d of the server device 10 according to one embodiment. In the example illustrated in FIG. 6, the work report storage unit 14d includes items of an "operation device", a "date", and a "work report".

The "operation device" indicates identification information for identifying an operation device that is operated by the worker W and that is not connected to a network, and is, for example, an identification number or an identification symbol of the controller 30. The "date" indicates a work period related to the operation device that is operated by the worker W, and is, for example, year, month, and day on which a series of work processes related to the controller 30 is performed. The "work report" is a report in which a work content related to the operation device of the worker W is recorded, and is, for example, data including sentence data, such as the identification number of the controller 30, the name of the worker W, performed work, or recorded data, image data, or the like.

Specifically, FIG. 6 illustrates an example in which, with respect to the controller 30 that is identified by the "controller #1", data, such as {date: "date #1", work report: "work report #1"} or {date: "date #2", work report: "work report #2"}, is stored in the work report storage unit 14d.

### 2-2-5. Control unit 15

The control unit 15 controls the entire server device 10. The control unit 15 includes the notification unit 15a, the acquisition unit 15b, the analysis unit 15c, and the generation unit 15d. Here, the control unit 15 may be implemented by, for example, an electronic circuit, such as a Central Processing Unit (CPU) or a Micro Processing Unit (MPU), or an integrated circuit, such as an Application Specific Integrated Circuit (ASIC) or a Field Programmable Gate Array (FPGA).

### 2-2-5-1. Notification unit 15a

The notification unit 15a gives a notice of various kinds of information. Meanwhile, the notification unit 15a may refer to various kinds of information that are stored in the storage unit 14.

The notification unit 15a notifies the worker W of a work instruction on a predetermined work process related to the operation device that is operated by the worker W. Further, the notification unit 15a notifies the worker W of a notification content that is determined by the analysis unit 15c. Furthermore, the notification unit 15a gives a notice of the work instruction via the worker terminal 20 that is carried by the worker W. Moreover, the notification unit 15a notifies the worker W of, as the work instruction, operation for performing each of the work processes that are generated based on the SOP. For example, the notification unit 15a transmits instruction data that includes a first work instruction among pieces of instruction data including work instructions on the respective work processes that are generated by the operator based on the SOP to the worker terminal 20 that is a tablet terminal carried by the worker W, and displays the instruction data on the monitor M of the worker terminal 20.

As a specific example, the notification unit 15a identifies the "work process #1" that is a first work process for the worker W who operates the controller 30 that is identified by the "controller #1", refers to, from the instruction data storage unit 14a, {work process: "work process #1", work instruction: "work instruction #1"} as instruction data that includes the "work instruction #1" that is the first work instruction to be given to the worker W, transmits the instruction data to the worker terminal 20 that is identified as a transmission destination, and displays the "work instruction #1" together with a flowchart that indicates a work instruction on each of the work processes on the monitor M of the worker terminal 20.

Furthermore, the notification unit 15a refers to, from the analysis result storage unit 14c, the "analysis data #1" as analysis data that is an analysis result with respect to the "work instruction #1", identifies the "work process #2" that is a second work process for the worker W who operates the controller 30 that is identified by the "controller #1" when it is determined that the worker W has performed correct operation, refers to, from the instruction data storage unit 14a, {work process: "work process #2", work instruction: "work instruction #2"} as instruction data that includes the "work instruction #2" that is the second work instruction to be given to the worker W, transmits the instruction data to the worker terminal 20 that is identified as the transmission destination, and displays the "work instruction #2" together with a flowchart that indicates a work instruction on each of the work processes on the monitor M of the worker terminal 20. In this case, the "notification data #1" as notification data that is an analysis result with respect to the "work instruction #1" is referred to from the analysis result storage unit 14c, the notification data is transmitted to the worker terminal 20, and a work normal message, such as "controller is normally activated by first work" or "data read is normally completed by first work", which indicates that the worker W has performed correct operation is displayed on the monitor M of the worker terminal 20.

Moreover, the notification unit 15a refers to, from the analysis result storage unit 14c, the "analysis data #1" as analysis data that is an analysis result with respect to the "work instruction #1", refers to, from the analysis result storage unit 14c, the "notification data #1" as notification data that is an analysis result with respect to the "work instruction #1" when it is determined that the worker W has performed incorrect operation, transmits the notification data to the worker terminal 20, and displays a work abnormal message, such as "controller is not normally activated by first work" or "data read is not normally completed by first work", which indicates that the worker W has performed incorrect operation on the monitor M of the worker terminal 20. In this case, the notification unit 15a may cause the worker terminal 20 to generate a warning sound or the like in addition to causing the worker terminal 20 to display the work abnormal message.

Furthermore, the notification unit 15a refers to, from the analysis result storage unit 14c, the "analysis data #1" as analysis data that is an analysis result with respect to the "work instruction #1", refers to, from the instruction data storage unit 14a, {work process: "work process #1", work instruction: "work instruction #1-2"} as instruction data that includes a "work instruction #1-2" that is changed from the first work instruction and that is to be given to the worker W when it is determined that the worker W has performed incorrect operation, transmits the instruction data to the worker terminal 20 that is identified as the transmission destination, and displays the "work instruction #1-2" together with a flowchart that indicates a work instruction on each of the work processes on the monitor M of the worker terminal 20. In this case, the notification unit 15a refers to, from the analysis result storage unit 14c, the "notification data #1" as notification data that is an analysis result with respect to the "work instruction #1", transmits the notification data to the worker terminal 20, and displays a work change message, such as "controller is not normally activated by first work, so press operation button again" or "data read is not normally completed by first work, so directly input data in tablet terminal", which indicates that a work to be performed by the worker W is changed on the monitor M of the worker terminal 20.

Meanwhile, as will be described in a first modification of one embodiment below, the notification unit 15a is able to give a notice of the work instruction via a wearable device, such as smart glasses G, which is worn on the worker W. Further, as will be described in a third modification and a fourth modification of one embodiment below, the notification unit 15a is able to notify the worker W of a work instruction that is transmitted by a higher-level server device 40 serving as a management apparatus that manages a plurality of operation devices. Furthermore, as will be described in a first application example of one embodiment below, the notification unit 15a is able to notify the worker W of a history of operation that is selected as best operation among operation that is performed in the past on the operation device, such as the controller 30.

### 2-2-5-2. Acquisition unit 15b

The acquisition unit 15b acquires various kinds of information. Meanwhile, the acquisition unit 15b may store the acquired various kinds of information in the storage unit 14. Further, the acquisition unit 15b may refer to various kinds of information that are stored in the storage unit 14. An operation data acquisition process (an image data acquisition process, an eye-tracking data acquisition process, and a location data acquisition process) will be described below.

### Operation data acquisition process

The acquisition unit 15b acquires operation data for identifying operation that is performed on the operation device by the worker W in accordance with a work instruction. For example, as will be described later, the acquisition unit 15b acquires, as the operation data, image data, eye-tracking data, location data, or the like.

### Image data acquisition process

The acquisition unit 15b acquires, as the operation data, image data for identifying a state of the operation screen of the operation device. For example, the acquisition unit 15b acquires image data that is captured by the camera C as an image capturing device that is arranged at a position at which an image of the operation screen of the operation device can be captured. Specifically, the acquisition unit 15b acquires image data that is captured by the camera C that is arranged at a position at which an image of the operation panel P of the controller 30 can be captured in the vicinity of the controller 30.

As a specific example of the image data acquisition process, the acquisition unit 15b acquires, as image data that is captured by the camera C that is arranged in the vicinity of the controller 30 that is identified by the "controller #1", {work process: "work process #1", image data: "image data #1"}, {work process: "work process #2", image data: "image data #2"}, {work process: "work process #3", image data: "image data #3"}, or the like, and stores the image data in the operation data storage unit 14b.

### Eye-tracking data acquisition process

The acquisition unit 15b acquires, as the operation data, eye-tracking data for identifying a line of sight of the worker W with respect to the operation screen of the operation device. For example, the acquisition unit 15b acquires eye-tracking data that is detected by the eye-tracking sensor S as a sensor device that is arranged at a position at which the line of sight of the worker W who operates the operation device is detectable. Specifically, the acquisition unit 15b acquires the eye-tracking data that is detected by the eye-tracking sensor S that is arranged at a position at which the line of sight of the worker W who operates the controller 30 is detectable in the vicinity of the controller 30.

As a specific example of the eye-tracking data acquisition process, the acquisition unit 15b acquires, as the eye-tracking data that is detected by the eye-tracking sensor S that is arranged in the vicinity of the controller 30 that is identified by the "controller #1", {work process: "work process #1", eye-tracking data: "eye-tracking data #1"}, {work process: "work process #2", eye-tracking data: "eye-tracking data #2"}, {work process: "work process #3", eye-tracking data: "eye-tracking data #3"}, or the like, and stores the eye-tracking data in the operation data storage unit 14b.

### Location data acquisition process

The acquisition unit 15b acquires, as the operation data, location data for identifying a location of the worker W who operates the operation device. For example, the acquisition unit 15b acquires the location data that is detected by a location sensor as a sensor apparatus that is incorporated in the worker terminal 20.

As a specific example of the location data acquisition process, the acquisition unit 15b acquires, as location data that is detected by a GPS sensor that is incorporated in the worker terminal 20 that is carried by the worker W who operates the controller 30 that is identified by the "controller #1", {work process: "work process #1", location data: "location data #1"}, {work process: "work process #2", location data: "location data #2"}, {work process: "work process #3", location data: "location data #3"}, or the like, and stores the location data in the operation data storage unit 14b.

Meanwhile, as will be described in the first modification of one embodiment, the acquisition unit 15b is able to acquire image data that is captured by a wearable device, such as the smart glasses G, which is worn on the worker W. Further, similarly, the acquisition unit 15b is able to acquire eye-tracking data that is captured by a wearable device, such as the smart glasses G, which is worn on the worker W. Furthermore, similarly, the acquisition unit 15b is able to acquire location data that is captured by a wearable device, such as the smart glasses G, which is worn on the worker W. Moreover, as will be described in a second modification of one embodiment, the acquisition unit 15b is able to acquire image data that is captured by the worker terminal 20, such as a smartphone, which is carried by the worker W. Furthermore, as will be described in the third modification and the fourth modification of one embodiment, the acquisition unit 15b is able to acquire apparatus identification information for identifying the operation device.

### 2-2-5-3. Analysis unit 15c

The analysis unit 15c analyzes various kinds of information. Meanwhile, the analysis unit 15c may store an analysis result in the storage unit 14. Further, the analysis unit 15c may refer to various kinds of information that are stored in the storage unit 14.

The analysis unit 15c analyzes the operation data and determines a notification content for the worker W. For example, the analysis unit 15c determines, as the notification content, a work instruction on a next work process of a predetermined work process, an error message for operation that is performed by the worker W, or a change in the work instruction on a predetermined work process.

Further, the analysis unit 15c determines appropriateness of operation that is performed on the operation device by the worker W by using at least one of the image data and the eye-tracking data. In this case, the analysis unit 15c may determine the appropriateness of the operation that is performed on the operation device by the worker W by further using the location data. Furthermore, the analysis unit 15c records characters of an operation screen that is viewed by the worker W by using at least one of the image data and the eye-tracking data. In this case, the analysis unit 15c may record the characters of the operation screen that is viewed by the worker W by further using the location data.

Here, the analysis unit 15c is able to generate analysis data indicating a time that is taken before a numerical value that is displayed on the operation panel P is changed from a certain value to another value, for example. Further, the analysis unit 15c is able to perform a process of calculating an average value when measurement data varies (is unstable), for example.

As a specific example, the analysis unit 15c refers to, from the operation data storage unit 14b, {work process: "work process #1", image data: "image data #1", eye-tracking data: "eye-tracking data #1", location data: "location data #1"} as operation data that corresponds to the "work instruction #1" that is the first work instruction that is given to the worker W who operates the controller 30 that is identified by the "controller #1". Further, the analysis unit 15c analyzes the "image data #1" by referring to layout information on the operation panel P (for example, button arrangement on the operation panel P) or information on response or transition of a screen (for example, "operation" lamp is lighted" when an "operation" button is pressed), which is stored in the storage unit 14, determines whether the operation of the worker W is correct or the operation of the worker W is incorrect, and identifies the operation of the worker W or a result of the operation. Furthermore, the analysis unit 15c generates the "analysis data #1" as analysis data that includes the identification result. Moreover, the analysis unit 15c stores the "analysis data #1" as the generated analysis data in the analysis result storage unit 14c.

Furthermore, the analysis unit 15c refers to, from the operation data storage unit 14b, {work process: "work process #1", image data: "image data #1", eye-tracking data: "eye-tracking data #1", location data: "location data #1"} as the operation data that corresponds to the "work instruction #1" that is the first work instruction that is given to the worker W who operates the controller 30 that is identified by the "controller #1". Moreover, the analysis unit 15c analyzes, by an OCR process, the "image data #1" that corresponds to the coordinate data that indicates a region on the operation panel P indicated by the "eye-tracking data #1", acquires character data in the region in the operation panel P that is viewed by the worker W, and identifies the operation of the worker W or a result of the operation. Furthermore, the analysis unit 15c generates the "analysis data #1" as analysis data that includes the identification result. Moreover, the analysis unit 15c stores the "analysis data #1" as the generated analysis data in the analysis result storage unit 14c.

Furthermore, the analysis unit 15c refers to, from the operation data storage unit 14b, {work process: "work process #1", image data: "image data #1", eye-tracking data: "eye-tracking data #1", location data: "location data #1"} as the operation data that corresponds to the "work instruction #1" that is the first work instruction that is given to the worker W who operates the controller 30 that is identified by the "controller #1". Moreover, the analysis unit 15c analyzes the "location data #1" by referring to coordinate data in the production plant of the controller 30, which is stored in the storage unit 14, determines whether the controller 30 or a work place on or in which the worker W performs operation is correct or the controller 30 or the work place on or in which the worker W performs operation is incorrect, and identifies the operation of the worker W or a result of the operation. Furthermore, the analysis unit 15c generates the "analysis data #1" as analysis data that includes the identification result. Moreover, the analysis unit 15c stores the "analysis data #1" as the generated analysis data in the analysis result storage unit 14c.

Furthermore, the analysis unit 15c refers to, from the analysis result storage unit 14c, the "analysis data #1" as the analysis data, and generates, as notification data, the "notification data #1" that includes a work normal message, such as "controller is normally activated by first work" or "data read is normally completed by first work", which indicates that the worker W has performed correct operation. Moreover, the analysis unit 15c stores the "notification data #1" as the generated notification data in the analysis result storage unit 14c.

Furthermore, the analysis unit 15c refers to, from the analysis result storage unit 14c, the "analysis data #1" as the analysis data, and generates, as notification data, the "notification data #1" that includes a work abnormal message, such as "controller is not normally activated by first work" or "data read is not normally completed by first work", which indicates that the worker W has performed incorrect operation. Moreover, the analysis unit 15c stores the "notification data #1" as the generated notification data in the analysis result storage unit 14c.

Moreover, the analysis unit 15c refers to, from the analysis result storage unit 14c, the "analysis data #1" as the analysis data, and generates, as notification data, the "notification data #1-2" that includes a work change message, such as "controller is not normally activated by first work, so press operation button again" or "data read is not normally completed by first work, so directly input data in tablet terminal", which indicates that a work to be performed by the worker W is changed. Furthermore, the analysis unit 15c stores the "notification data #1-2" as the generated notification data in the analysis result storage unit 14c.

Meanwhile, as will be described in the third modification and the fourth modification of one embodiment below, the analysis unit 15c generates a model that enables data translation related to the operation device that is identified by using the acquired apparatus identification information. Here, the data translation is, for example, a process for enabling smooth data communication by a certain process, such as data analysis, data exchange, or data integration, between a higher-level device and a lower-level apparatus.

### 2-2-5-4. Generation unit 15d

The generation unit 15d generates various kinds of information. Meanwhile, the generation unit 15d may store the generated various kinds of information in the storage unit 14. Further, the generation unit 15d may refer to various kinds of information that are stored in the storage unit 14.

When all of the work processes performed by the worker W are completed, the generation unit 15d generates a work report in which a work status of the worker W related to the operation device is recorded. For example, when all of the work processes that are performed by the controller 30 are completed, the generation unit 15d generates a work report that includes the identification number of the controller 30, the name of the worker W, performed work, recorded data, or the like.

As a specific example, the generation unit 15d refers to, from the analysis result storage unit 14c, "analysis data #N" as analysis data that corresponds to a "work instruction #N" that is a last work instruction given to the worker W who operates the controller 30 that is identified by the "controller #1". Further, when an identification result indicating that the "work instruction #N" is normally completed is included, the generation unit 15d refers to, from the analysis result storage unit 14c, the "analysis data #1", the "analysis data #2", the "analysis data #3", ..., the "analysis data #N" as pieces of analysis data corresponding to all of the work processes, and extracts, as the identification result, the operation of the worker W or a result of the operation as a work content (the identification number of the controller 30, the name of the worker W, performed work, recorded data, or the like). Furthermore, the generation unit 15d stores {date: "date #1", work report: "work report #1"} as a work report that includes the extracted work content in the work report storage unit 14d.

### 2-3. Configuration example and process example of worker terminal 20

Referring back to FIG. 2, a configuration example and a process example of the worker terminal 20 will be described. The worker terminal 20 is an example of an apparatus that is operated by the worker W and that is connected to a network. The worker terminal 20 includes a control unit 21, a communication unit 22, and a monitor M.

### 2-3-1. Control unit 21

The control unit 21 transmits various kinds of information. For example, the control unit 21 transmits the location data that is detected by the location sensor to the server device 10. Further, the control unit 21 transmits a work instruction execution completion request that is received from the worker W, a work instruction skip request, and input data, such as measurement data, to the server device 10.

The control unit 21 receives various kinds of information. For example, the control unit 21 receives instruction data that is transmitted from the server device 10. Furthermore, the control unit 21 receives notification data that is transmitted from the server device 10.

### 2-3-2. Communication unit 22

The communication unit 22 controls data communication with a different apparatus. For example, the communication unit 22 performs data communication with each of the communication apparatuses via a router or the like. Further, the communication unit 22 is able to perform data communication with a terminal or the like (not illustrated).

### 2-3-3. Monitor M

The monitor M controls input of various kinds of information to the worker terminal 20. For example, the monitor M is implemented by a touch panel or the like, and receives input of various kinds of information to the worker terminal 20. Further, the monitor M controls display of various kinds of information from the worker terminal 20. For example, the monitor M is implemented by a touch panel or the like, and displays various kinds of information that are stored in the worker terminal 20.

Furthermore, the monitor M displays, as a work instruction screen, the instruction data that is transmitted from the server device 10 that is the information providing apparatus. Meanwhile, details of the work instruction screen will be described below in (2-3-4. Specific example of display screen of worker terminal 20).

### 2-3-4. Specific example of display screen of worker terminal 20

The work instruction screen will be described below with reference to FIG. 7 as a specific example of a display screen that is output by the monitor M of the worker terminal 20. FIG. 7 is a diagram illustrating a specific example of the display screen of the worker terminal 20 according to one embodiment. A display mode of the work instruction, a type of the work instruction, and the like will be described below.

### 2-3-4-1. Display mode of work instruction

The worker terminal 20 displays, in the work instruction screen, a flowchart that indicates a work instruction on each of the work processes on the monitor M. In the example illustrated in FIG. 7, the worker terminal 20 notifies the worker W of the work instructions, that is, a "manual work 1 instruction", a "screen operation 1 instruction", and an "automatic control 1 display" in this order. Furthermore, the worker terminal 20 is able to display a work instruction that is being executed in the flowchart in a colored manner or in an enlarged manner, or display a work instruction that is already executed or a work instruction that is not yet executed in a grayed-out manner or in a reduced manner. In the example illustrated in FIG. 7, the worker terminal 20 displays, in a grayed-out manner, the "manual work 1 instruction" that is already executed and the "automatic control 1 display" that is not yet executed, and displays, in an enlarged manner, the "screen operation 1 instruction" that is being executed. Moreover, the worker terminal 20 may display a list of the work instructions of all of the work processes, and displays, in a highlighted manner, the work instruction that is being executed.

### 2-3-4-2. Type of work instruction

The worker terminal 20 displays, in the work instruction screen, a "manual work instruction", such as raw material input in a production plant, a "screen operation instruction", such as operation on the operation panel P of the controller 30, "automatic control display", such as data monitoring during automatic control on the controller 30, a "data recording instruction", such as record of measurement data of the operation panel P of the controller 30, a "control start instruction", such as start of operation of the controller 30, a "control interruption instruction, such as interruption of operation of the controller 30, or a "control termination instruction", such as termination of operation of the controller 30, but a type of the work instruction is not specifically limited.

### 2-3-4-3. Others

The worker terminal 20 is able to display, in the work instruction screen, a flowchart that indicates a work instruction of each of the work processes on the monitor M, and also output, by voice, a work instruction that is being executed. Further, when the worker W taps, in the work instruction screen, the work instruction that is indicated by the flowchart on the monitor M, the worker terminal 20 is able to display a display screen that represents details of the work instruction. Furthermore, the worker terminal 20 is able to receive, in the work instruction screen, input of work instruction execution completion or input of work instruction skip by operation that is performed on the monitor M by the worker W.

### 2-4. Configuration example and process example of controller 30

Referring back to FIG. 2, a configuration example and a process example of the controller 30 will be described. The controller 30 is an example of an operation device that is operated by the worker W and that is not connected to a network. The controller 30 is an apparatus that controls a plurality of control target apparatuses and includes a control unit 31 and the operation panel P.

### 2-4-1. Control unit 31

The control unit 31 performs various kinds of control. For example, the control unit 31 transmits a control signal to a control target apparatus. Further, the control unit 31 collects measurement data from the control target apparatus.

### 2-4-2. Operation panel P

The operation panel P controls input of various kinds of information to the controller 30. For example, the operation panel P is implemented by a touch panel or the like, and receives input of tap operation that is performed on the controller 30 by the worker W. Further, the operation panel P controls display of various kinds of information from the controller 30. For example, the operation panel P is implemented by a touch panel or the like, and displays an operation screen that includes an operation button or measurement data that is stored in the controller 30. Meanwhile, details of the operation screen of the operation panel P will be described below in (2-4-3. Specific example of display screen of controller 30).

### 2-4-3. Specific example of display screen of controller 30

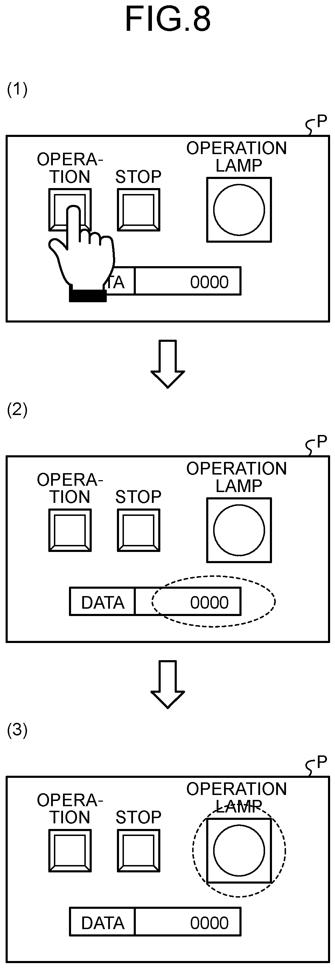

The operation screen will be described below with reference to FIG. 8 as a specific example of a display screen that is output by the operation panel P of the controller 30. FIG. 8 is a diagram illustrating a specific example of the display screen of the controller 30 according to one embodiment. Basic display, data display, state display, and the like of the operation screen will be described below.

### 2-4-3-1. Basic display of operation screen

As illustrated in FIG. 8(1), the controller 30 displays, on the operation panel P, an operation screen that includes icons indicating an operation button, state display, data display, and the like. In the example illustrated in FIG. 8(1), the controller 30 displays, as operation buttons, an icon of "operation" for receiving input of start of operation of the controller 30, and an icon of "stop" for receiving input of termination of the operation or interruption of the operation of the controller 30. Further, the controller 30 displays, as the state display, an icon of an "operation lamp" that is lighted when the controller 30 is operating. Furthermore, the controller 30 displays, as the data display, an icon of "data" including a numerical value of measurement data that is measured by the controller 30. Here, the worker W is able to start operation of the controller 30 by performing tap operation on the operation button of "operation".

### 2-4-3-2. Data display

As illustrated in FIG. 8(2), the controller 30 displays, on the operation panel P, an operation screen that includes an icon of data display or the like. Here, when the worker W views the numerical value of the measurement data that is included in the icon of "data" for a certain period of time, the server device 10 is able to identify that the measurement data is "0000" (see a dashed ellipse in FIG. 8(2)) based on the image data that is generated by the camera C or the eye-tracking data that is generated by the eye-tracking sensor S.

### 2-4-3-3. State display

As illustrated in FIG. 8(3), the controller 30 displays, on the operation panel P, an operation screen that includes an icon of state display or the like. Here, when the worker W performs tap operation on the operation button of "operation", the server device 10 is able to identify lighting of the "operation lamp" (see a dashed circle in FIG. 8(3)) based on the image data that is generated by the camera C, and determine that the worker W has performed appropriate operation.

### 2-5. Camera C

Referring back to FIG. 2, a configuration example and a process example of the camera C will be described. The camera C is an image capturing device that is installed at a position at which an image of the operation screen of the operation device can be captured. For example, the camera C is arranged at a position at which an image of the operation panel P of the controller 30 can be captured in the vicinity of the controller 30. Further, the camera C captures an image of the operation screen of the operation panel P, and generates image data for identifying a state of the operation screen of the operation panel P.

Meanwhile, as will be described in the first modification of one embodiment, the camera C may be arranged on the smart glasses G. Further, as will be described in the second modification of one embodiment, the camera C may be mounted on the worker terminal 20.

### 2-6. Eye-tracking sensor S

Referring back to FIG. 2, a configuration example and a process example of the eye-tracking sensor S will be described. The eye-tracking sensor S is a sensor device that is arranged at a position at which a line of sight of the worker W who operates the operation device is detectable. For example, the eye-tracking sensor S is arranged at a position at which a line of sight of the worker W who operates the controller 30 in the vicinity of the controller 30. Further, the eye-tracking sensor S detects a line of sight of the worker W who operates the operation panel P, and generates eye-tracking data for identifying the line of sight of the worker W with respect to the operation screen of the operation panel P.

Meanwhile, as will be described in the first modification of one embodiment, the eye-tracking sensor S may be mounted on the smart glasses G.

### 3. Flow of each of processes of work management system 100

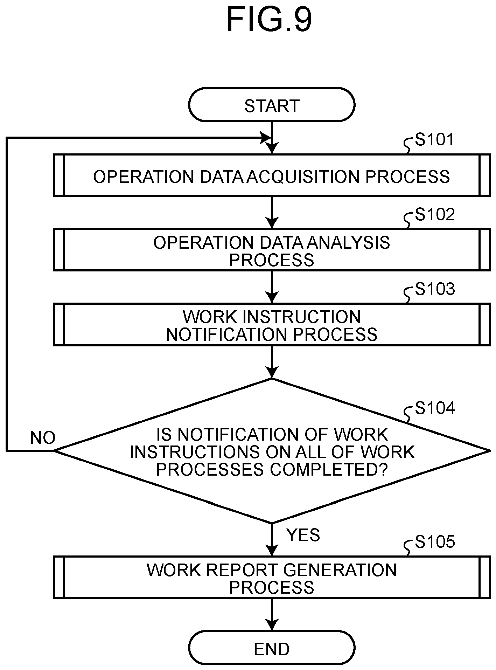

Flows of processes that are performed by the work management system 100 according to one embodiment will be described below with reference to FIG. 9 to FIG. 13. In the following, the flow of the entire process performed by the work management system 100 will be first described, and thereafter, a work instruction notification process, an operation data acquisition process, an operation data analysis process, and a work report generation process will be described as each of processes.

### 3-1. Entire process of work management system 100

The flow of an entire process performed by the work management system 100 according to one embodiment will be described below with reference to FIG. 9. FIG. 9 is a flowchart illustrating an example of the entire flow of the work management system 100 according to one embodiment. Meanwhile, processes from Step S101 to Step S105 below may be performed in a different order. Further, some of the processes from Step S101 to Step S105 below may be omitted.

### 3-1-1. Operation data acquisition process

Firstly, the server device 10 performs the operation data acquisition process (Step S101). For example, by performing processes from Step S201 to Step S205 to be described later, the server device 10 acquires operation data for identifying operation related to the controller 30.

### 3-1-2. Operation data analysis process

Secondly, the server device 10 performs the operation data analysis process (Step S102). For example, by performing processes from Step S301 to Step S306 to be described later, the server device 10 identifies operation that is performed on the controller 30 by the worker W or a result of the operation, and determines a notification content for the worker W.

### 3-1-3. Work instruction notification process

Thirdly, the server device 10 performs the work instruction notification process (Step S103). For example, by performing processes from Step S401 to Step S404 to be described later, the server device 10 notifies the worker W who operates the controller 30 of a work instruction on a predetermined work process.

Here, when the server device 10 completes notification of the work instructions on all of the work processes (Step S104: Yes), the process goes to Step S105. In contrast, when notification of the work instructions on all of the work processes is not completed (Step S104: No), the process returns to Step S101.

### 3-1-4. Work report generation process

Fourthly, the server device 10 performs a work report generation process (Step S105), and the entire process of the work management system 100 is terminated. For example, by performing processes from Step S501 to Step S503 to be described later, the server device 10 generates a work report in which a work content for the worker W related to the controller 30 is recorded.

### 3-2. Operation data acquisition process

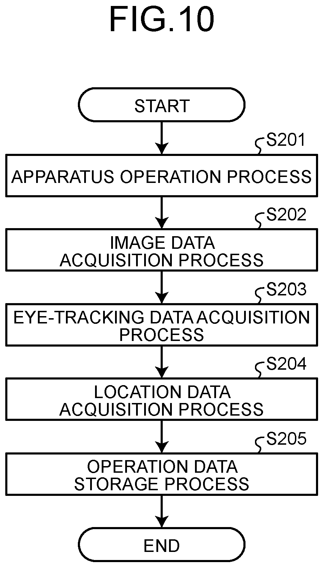

The flow of the operation data acquisition process performed by the work management system 100 according to one embodiment will be described below with reference to FIG. 10. FIG. 10 is a flowchart illustrating an example of the flow of the operation data acquisition process of the work management system 100 according to one embodiment. Meanwhile, processes from Step S201 to Step S205 below may be performed in a different order. Further, some of the processes from Step S201 to Step S205 below may be omitted.

### 3-2-1. Device operation process

Firstly, the worker W performs the device operation process (Step S201). For example, the worker W performs, as operation related to the controller 30, raw material input to a tank that is controlled by the controller 30, input to the operation panel P of the controller 30, visual check of measurement data that is measured by the controller 30, or the like.

### 3-2-2. Image data acquisition process

Secondly, the server device 10 performs the image data acquisition process (Step S202). For example, the server device 10 acquires the image data of the operation screen of the operation panel P that is captured by the camera C that is arranged at a position at which an image of the operation panel P of the controller 30 can be captured.

### 3-2-3. Eye-tracking data acquisition process

Thirdly, the server device 10 performs the eye-tracking data acquisition process (Step S203). For example, the server device 10 acquires eye-tracking data of the worker W with respect to the operation screen of the operation panel P, which is detected by the eye-tracking sensor S that is arranged at a position at which the line of sight of the worker W who operates the controller 30 is detectable on the operation panel P.

### 3-2-4. Location data acquisition process

Fourthly, the server device 10 performs the location data acquisition process (Step S204). For example, the server device 10 acquires location data of the worker W that is detected by the location sensor that is incorporated in the worker terminal 20.

### 3-2-5. Operation data storage process

Fifthly, the server device 10 performs the operation data storage process (Step S205), and terminates the operation data acquisition process. For example, the server device 10 stores the operation data that is acquired through the processes from Step S202 to Step S204 in the operation data storage unit 14b.

### 3-3. Operation data analysis process

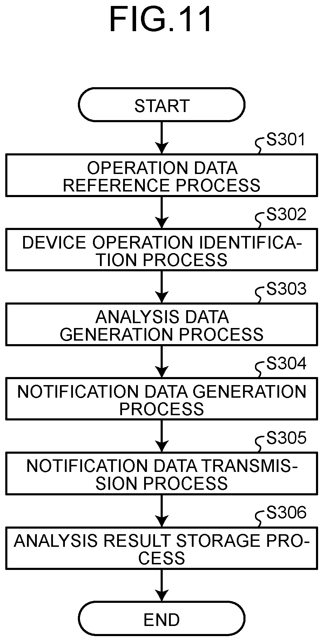

The flow of the operation data analysis process performed by the work management system 100 according to one embodiment will be described below with reference to FIG. 11. FIG. 11 is a flowchart illustrating an example of the flow of the operation data analysis process of the work management system 100 according to one embodiment. Meanwhile, processes from Step S301 to Step S306 below may be performed in a different order. Further, some of the processes from Step S301 to Step S306 below may be omitted.

### 3-3-1. Operation data reference process

Firstly, the server device 10 performs an operation data reference process (Step S301). The server device 10 refers to latest operation data among pieces of operation data that are stored in the operation data storage unit 14b.

### 3-3-2. Apparatus operation identification process

Secondly, the server device 10 performs an apparatus operation identification process (Step S302). For example, the server device 10 analyzes the operation data that is referred to in the process at Step S301, and identifies operation that is performed by the worker W or a result of the operation.

### 3-3-3. Analysis data generation process

Thirdly, the server device 10 performs an analysis data generation process (Step S303). For example, the server device 10 generates analysis data that includes the operation that is performed by the worker W or the result of the operation, which is identified in the process at Step S302.

### 3-3-4. Notification data generation process

Fourthly, the server device 10 performs a notification data generation process (Step S304). For example, the server device 10 determines a notification content for the worker W based on the analysis data that is generated in the process at Step S303, and generates notification data that includes a message indicating the notification content.

### 3-3-5. Notification data transmission process

Fifthly, the server device 10 performs a notification data transmission process (Step S305). For example, the server device 10 transmits the notification data that is generated in the process at Step S304 to the worker terminal 20.

### 3-3-6. Analysis result storage process

Sixthly, the server device 10 performs an analysis result storage process (Step S306), and terminates the operation data analysis process. For example, the server device 10 stores the analysis data that is generated in the process at Step S303 and the notification data that is generated in the process at Step S304 in the analysis result storage unit 14c.

### 3-4. Work instruction notification process

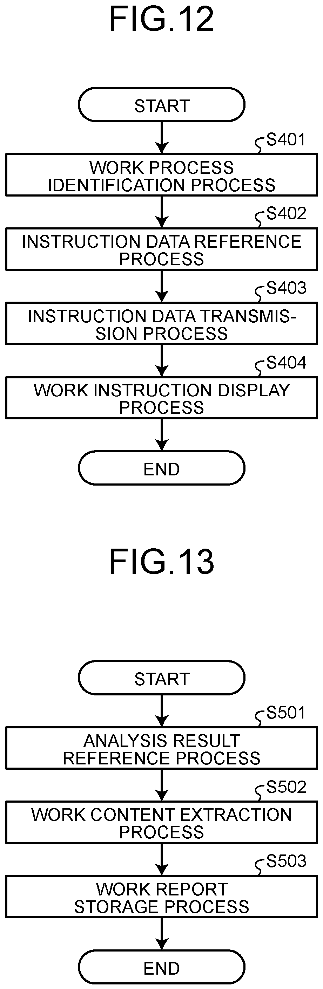

The flow of the work instruction notification process performed by the work management system 100 according to one embodiment will be described below with reference to FIG. 12. FIG. 12 is a flowchart illustrating an example of the flow of the work instruction notification process of the work management system 100 according to one embodiment. Meanwhile, processes from Step S401 to Step S404 below may be performed in a different order. Further, some of the processes from Step S401 to Step S404 may be omitted.

### 3-4-1. Work process identification process

Firstly, the server device 10 performs a work process identification process (Step S401). For example, the server device 10 identifies a work process for which a work instruction is to be given to the worker W among all of the work processes for performing works on the controller 30.

### 3-4-2. Instruction data reference process

Secondly, the server device 10 performs an instruction data reference process (Step S402). The server device 10 refers to instruction data that includes the work instruction on the work process that is identified in the process at Step S401 among the work instructions that are stored in the instruction data storage unit 14a.

### 3-4-3. Instruction data transmission process

Thirdly, the server device 10 performs the instruction data transmission process (Step S403). For example, the server device 10 transmits instruction data that includes the work instruction that is referred to in the process at Step S402 to the worker terminal 20.

### 3-4-4. Work instruction display process

Fourthly, the worker terminal 20 performs a work instruction display process (Step S404), and terminates the work instruction notification process. For example, the worker terminal 20 receives the instruction data that includes the work instruction that is transmitted in the process at Step S403, displays the work instruction to be given to the worker W in a highlighted manner, and displays a flowchart or a list that indicates the work instruction on each of the work processes on the monitor M.

### 3-5. Work report generation process

The flow of the work report generation process performed by the work management system 100 according to one embodiment will be described below with reference to FIG. 13 FIG. 13 is a flowchart illustrating an example of the operation data analysis process of the work management system 100 according to one embodiment. Meanwhile, processes from Step S501 to Step S503 below may be performed in a different order. Further, some of the processes from Step S501 to Step S503 may be omitted.

### 3-5-1. Analysis result reference process

Firstly, the server device 10 performs an analysis result reference process (Step S501). For example, when all of the work processes performed by the worker W are terminated, the server device 10 refers to analysis data corresponding to a target period among pieces of analysis data that are stored in the analysis result storage unit 14c.

### 3-5-2. Work content extraction process

Secondly, the server device 10 performs a work content extraction process (Step S502). For example, the server device 10 extracts a work content from the analysis data that is referred to in the process at Step S501, and outputs a work report that includes the extracted work content.

### 3-5-3. Work report storage process

Thirdly, the server device 10 performs a work report storage process (Step S503), and terminates the work report generation process. For example, the server device 10 stores the work report that is output in the process at Step S502 in the work report storage unit 14d.

### 4. Modifications and application examples of one embodiment

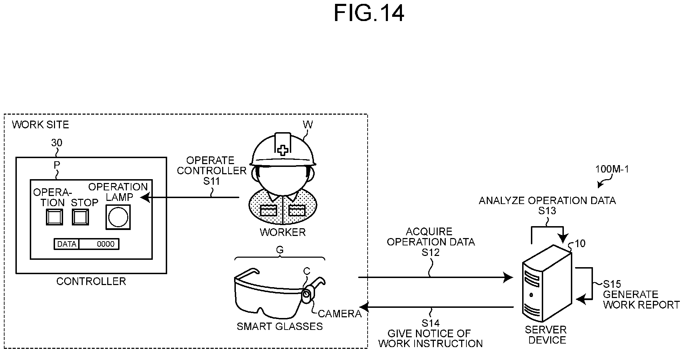

Modifications and application examples of one embodiment will be described below with reference to FIG. 14 to FIG. 18. In the following, a first modification to a fourth modification and a first application example to a seventh application example of one embodiment will be described.

### 4-1. First modification of one embodiment

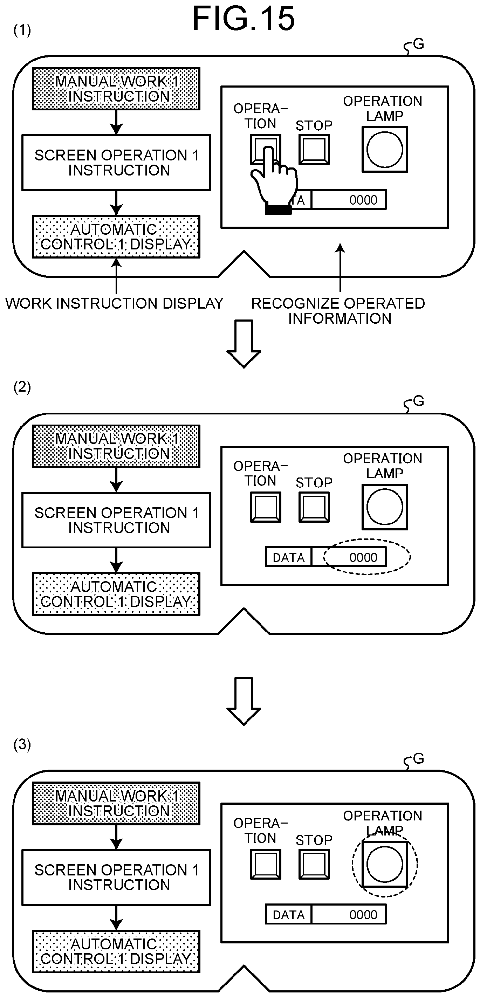

A configuration and a process of a work management system 100M-1 according to the first modification of one embodiment will be described below with reference to FIG. 14 and FIG. 15. FIG. 14 is a diagram illustrating a configuration example and a process example of the work management system 100M-1 according to the first modification of one embodiment. FIG. 15 is a diagram illustrating a specific example of a display screen of the smart glasses G according to the first modification of one embodiment. Meanwhile, explanation of the same configuration and the same processes as those of one embodiment will be omitted.

### 4-1-1. Configuration example of work management system 100M-1

The work management system 100M-1 includes the server device 10, the smart glasses G, and the controller 30. The server device 10 and the smart glasses G are communicably connected to each other in a wired or wireless manner via a predetermined communication network (not illustrated). Meanwhile, the work management system 100M-1 may include a relay apparatus (not illustrated) for connecting the server device 10 and the smart glasses G to a predetermined communication network.

The smart glasses G is a wearable device that is worn on the worker W in a work site of a production plant. The smart glasses G includes the camera C that is able to capture an image of the operation screen of the operation panel P. Further, the smart glasses G has a monitor function to enable display of a work instruction and an eye-tracking sensor function to enable detection of a line of sight of the worker W.

Meanwhile, the server device 10 is the same as that of the work management system 100 according to one embodiment, and therefore, explanation thereof will be omitted. Further, the controller 30 is the same as that of the work management system 100 according to one embodiment except that the camera C and the eye-tracking sensor S are not arranged in the vicinity of the controller 30, and therefore, explanation thereof will be omitted.

### 4-1-2. Process example of work management system 100M-1

The work management system 100M-1 performs a process as described below. Firstly, the worker W operates the controller 30 (Step S11). Secondly, the server device 10 acquires operation data via the smart glasses G (Step S12). Thirdly, the server device 10 analyzes the operation data (Step S13). Fourthly, the server device 10 notifies the worker W of a work instruction via the smart glasses G (Step S14). Fifthly, the server device 10 generates a work report (Step S15).

### 4-1-3. Specific example of display screen of smart glasses G

As a specific example of the display screen that is output by the smart glasses G, a work instruction screen will be described below with reference to FIG. 15.

As illustrated in FIG. 15(1), in the work instruction screen, the smart glasses G displays the flowchart that indicates the work instruction on each of the work processes. Further, the worker W is able to recognize operation that is being performed on the operation panel P of the controller 30 in a region in which the work instruction screen is not displayed. Specifically, when the worker W is wearing the smart glasses G, the worker W is able to view a work display screen of the smart glasses G and simultaneously perform operation on the controller 30.

As illustrated in FIG. 15(2), when the worker W views, via the smart glasses G, a numerical value of the measurement data that is included in the icon of "data" for a certain period of time or more, the server device 10 is able to identify that the measurement data is "0000" (see a dashed ellipse in FIG. 15(2)) based on the image data that is generated by the camera C that is arranged on the smart glasses G or the eye-tracking data that is generated by the smart glasses G.

As illustrated in FIG. 15(3), when the worker W who is wearing the smart glasses G performs tap operation on an operation button of "operation", the server device 10 is able to identify lighting of the "operation lamp" (see a dashed circle in FIG. 15(3)) based on the image data that is generated by the camera C that is arranged on the smart glasses G, and determine that the worker W has performed appropriate operation.

### 4-1-4. Effect of work management system 100M-1

As described above, in the work management system 100M-1 according to the first modification of one embodiment, it is not needed to arrange the camera C and the eye-tracking sensor S on the controller 30 of the work management system 100 according to one embodiment, and it is not needed to always carry the worker terminal 20, such as a tablet terminal. Therefore, in the work management system 100M-1, it is possible to more effectively connect pieces of information on apparatuses without physically modifying the apparatuses to connect each of the apparatuses to a network and without further changing an existing facility as compared to the work management system 100.

### 4-2. Second modification of one embodiment

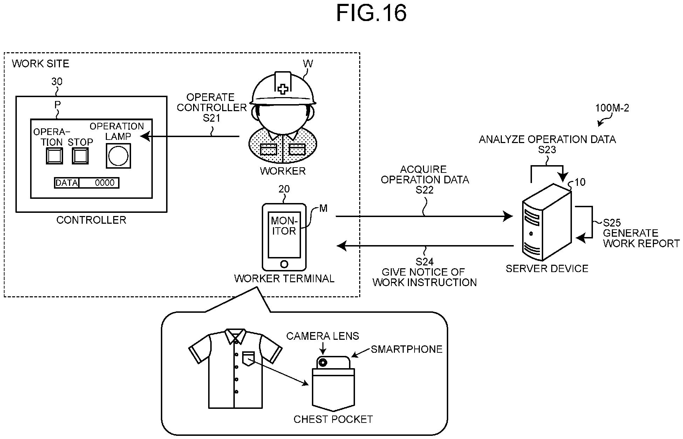

A configuration and a process of a work management system 100M-2 according to the second modification of one embodiment will be described below with reference to FIG. 16. FIG. 16 is a diagram illustrating a configuration example and a process example of the work management system 100M-2 according to the second modification of one embodiment. Meanwhile, explanation of the same configuration and the same processes as those of one embodiment will be omitted.

### 4-2-1. Configuration example of work management system 100M-2

The work management system 100M-2 includes the server device 10, the worker terminal 20, and the controller 30. The server device 10 and the worker terminal 20 are communicably connected to each other in a wired or wireless manner via a predetermined communication network (not illustrated).

The worker terminal 20 is a terminal that is carried by the worker W in a work site of a production plant. The worker terminal 20 is implemented by a smartphone or the like, and includes the monitor M that displays a work instruction. The worker terminal 20 includes the camera C that is able to capture an image of the operation screen of the operation panel P. Further, the work management system 100M-2 may include the eye-tracking sensor S that is able to detect a line of sight of the worker W who operates the controller 30 and that is arranged in the vicinity of the controller 30.

As illustrated in FIG. 16, when operating the operation panel P, the worker W stores the worker terminal 20 in a chest pocket or the like of the worker W such that a camera lens of the camera C protrudes so as to be able to capture an image of the operation screen of the operation panel P. In contrast, when viewing the work instruction screen, the worker W takes out the worker terminal 20 from the chest pocket or the like of the worker W and uses the worker terminal 20. In this case, the worker W may receive a work instruction by voice guidance that is output by the worker terminal 20 without taking out the worker terminal 20 from the chest pocket or the like of the worker W.

Meanwhile, the server device 10 is the same as that of the work management system 100 according to one embodiment, and therefore, explanation thereof will be omitted. Further, the controller 30 is the same as that of the work management system 100 according to one embodiment except that the camera C is not arranged in the vicinity of the controller 30, and therefore, explanation thereof will be omitted. Furthermore, the eye-tracking sensor S may be arranged in the vicinity of the controller 30.

### 4-2-2. Process example of work management system 100M-2

The work management system 100M-2 performs a process as described below. Firstly, the worker W operates the controller 30 (Step S21). Secondly, the server device 10 acquires operation data via the worker terminal 20 (Step S22). Thirdly, the server device 10 analyzes the operation data (Step S23). Fourthly, the server device 10 notifies the worker W of a work instruction via the worker terminal 20 (Step S24). Fifthly, the server device 10 generates a work report (Step S25).

### 4-2-3. Effect of work management system 100M-2

As described above, in the work management system 100M-2 according to the second modification of one embodiment, it is not needed to arrange the camera C or the like in the vicinity of the controller 30 of the work management system 100 according to one embodiment, and it is needed to carry only the worker terminal 20 that includes the camera C. Therefore, in the work management system 100M-2, it is possible to more effectively connect pieces of information on apparatuses without physically modifying the apparatuses to connect each of the apparatuses to a network, without further changing an existing facility as compared to the work management system 100, and without increasing the number of terminals as compared to the work management system 100M-1.

### 4-3. Third modification of one embodiment

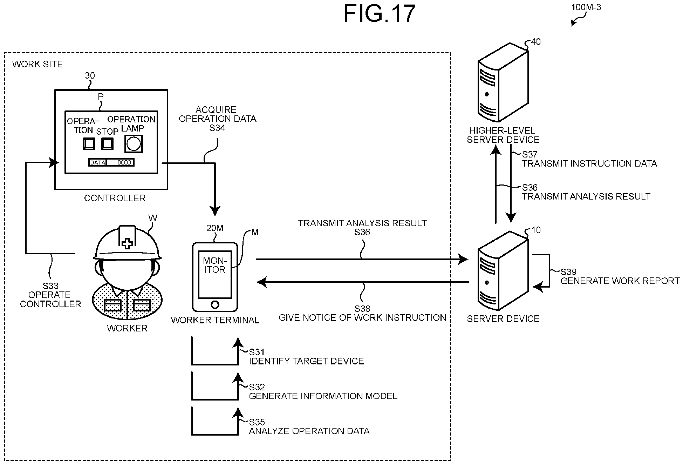

A configuration and a process of a work management system 100M-3 according to the third modification of one embodiment will be described below with reference to FIG. 17. FIG. 17 is a diagram illustrating a configuration example and a process example of the work management system 100M-3 according to the third modification of one embodiment. Meanwhile, explanation of the same configuration and the same processes as those of one embodiment will be omitted.

### 4-3-1. Configuration example of work management system 100M-3

The work management system 100M-3 includes the server device 10, a worker terminal 20M, the controller 30, and the higher-level server device 40. The server device 10, the worker terminal 20M, and the higher-level server device 40 are communicably connected to each other in a wired or wireless manner via a predetermined communication network (not illustrated).

The worker terminal 20M is a terminal that is carried by the worker W in a work site of a production plant. The worker terminal 20M is implemented by a smartphone or the like, and includes the monitor M that displays a work instruction. The worker terminal 20M acquires the apparatus identification information for identifying the controller 30. In this case, the worker terminal 20M acquires the identification information, such as a barcode, on the controller 30 which is displayed on the operation panel P of the controller 30 by operation of the worker W. Further, the worker terminal 20M is able to acquire location data of the worker W via the location sensor that is incorporated in the worker terminal 20M, and identify the controller 30 from the acquired location data. Furthermore, the worker terminal 20M is able to acquire the apparatus identification information that is directly input by the worker W. Specifically, when operating the controller 30, the worker terminal 20M is able to check whether or not the controller 30 is a correct operation target before the operation.

Furthermore, the worker terminal 20M generates a model that enables data translation related to the operation device that is identified by using the acquired apparatus identification information. For example, the worker terminal 20M generates an information model that enables translation of a parameter that is set in the identified controller 30 by using the acquired apparatus identification information, and performs data communication via the generated information model. Here, the information model is a model that allows the higher-level server device 40 to recognize the plurality of controllers 30 that receive different expressions and instructions as similar instructions and expressions. For example, the information model has a function to perform normalization such that even when units of numerical values are different due to a difference in vendors among the controllers 30 that have similar functions, the higher-level server device 40 can recognize the units as the same units. Therefore, with use of the information model, connection setting or the like becomes easy even when the plurality of controllers 30 cooperate with one another or a plurality of server devices 50 are connected to a higher-level device as will be described later in the fourth modification of one embodiment. Meanwhile, the process of acquiring the device identification information, the process of generating the information mode, and the process of performing the data communication via the information model as described above may be performed by the server device 10.

The higher-level server device 40 is a management apparatus that manages the server device 10. The higher-level server device 40 is able to notify the worker W of the work instruction via the information model that is generated by the worker terminal 20M. Specifically, the higher-level server device 40 is able to generate not only a work instruction that is generated based on the SOP, but also a work instruction that is specialized for the specific controller 30, a work instruction that corresponds to emergency, or the like, and notify the worker W of the work instruction.

Meanwhile, the server device 10 is the same as that of the work management system 100 according to one embodiment except for a process that is performed or that is not performed by the work management system 100M-3, and therefore, explanation thereof will be omitted. Further, the controller 30 is the same as that of the work management system 100 according to one embodiment or that of the work management system 100M-2 according to the second modification of one embodiment, and therefore, explanation thereof will be omitted.

### 4-3-2. Process example of work management system 100M-3

The work management system 100M-3 performs a process as described below. Firstly, the worker terminal 20M identifies the controller 30 that is a target apparatus by using the device identification information (Step S31). Secondly, the worker terminal 20M generates an information model that translates various kinds of data of the identified controller 30 (Step S32). Here, the information model performs conversion of, as the various kinds of data, various kinds of parameters, measurement data that is displayed on the controller 30, or a unit system that is used for operation of the controller 30. Specifically, the information model is able to perform data conversion on other than a unit system in which a higher-side is represented by "High" or "Low" and a lower-side is represented by "1" or "0". Thirdly, the worker W operates the operation panel P of the controller 30 (Step S33). Fourthly, the worker terminal 20M acquires the operation data (Step S34). Fifthly, the worker terminal 20M analyzes the operation data (Step S35). Sixthly, the worker terminal 20M transmits an analysis result to the server device 10 and the higher-level server device 40 via the information model (Step S36). Seventhly, the higher-level server device 40 transmits instruction data to the server device 10 (Step S37). Eighthly, the server device 10 notifies the worker W of the work instruction via the information model of the worker terminal 20 (Step S38). Ninthly, the server device 10 generates a work report (Step S39).

### 4-3-3. Effect of work management system 100M-3

As described above, in the work management system 100M-3 according to the third modification of one embodiment, it is possible to output an analysis result based on the information model that enables translation of various kinds of data of the identified controller 30. Further, in the work management system 100M-3, it is possible to notify the worker W of not only the work instruction that is generated from the SOP, but also the work instruction that is generated by the higher-level server device 40. Therefore, the work management system 100M-3 makes it possible to flexibly generate a work instruction at the time of emergency or the like as compared to the work management system 100, so that it is possible to more effectively connect pieces of information on apparatuses without physically modifying the apparatuses to connect each of the apparatuses to a network.

### 4-4. Fourth modification of one embodiment

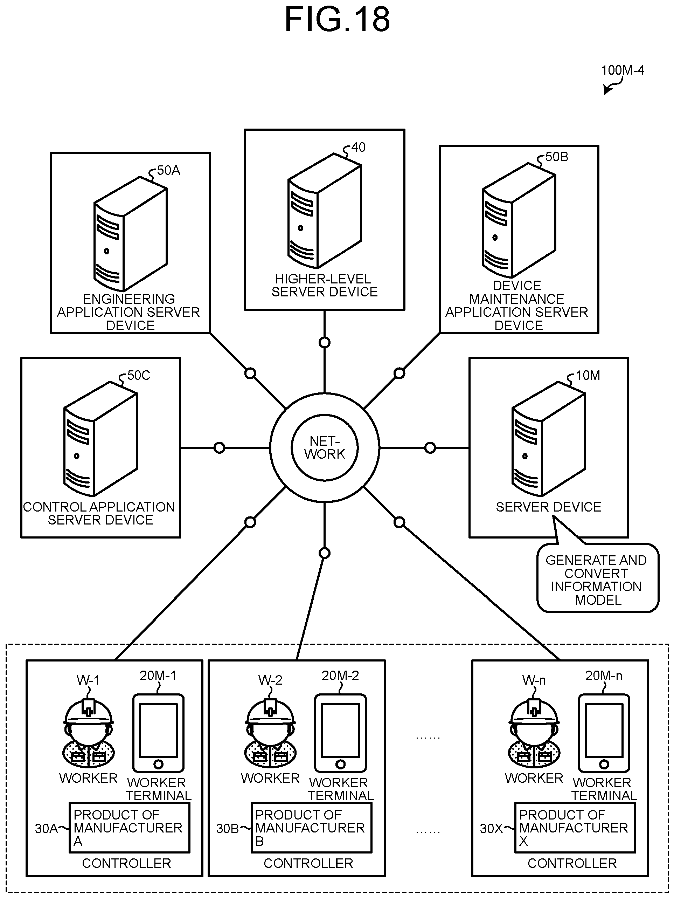

A configuration and a process of a work management system 100M-4 according to the fourth modification of one embodiment will be described below with reference to FIG. 18. FIG. 18 is a diagram illustrating a configuration example and a process example of the work management system 100M-4 according to the fourth modification of one embodiment. Meanwhile, explanation of the same configuration and the same processes as those of one embodiment will be omitted.

### 4-4-1. Configuration of work management system 100M-4

The work management system 100M-4 includes a server device 10M, the worker terminal 20M, the controller 30, the higher-level server device 40, and a cooperation server device 50. The server device 10M, the worker terminal 20M, the higher-level server device 40, and the cooperation server device 50 are communicably connected to each other in a wired or wireless manner via a predetermined communication network (not illustrated).

The work management system 100M-4 is able to integrally manage the plurality of controllers 30 (30A, 30B, ..., 30X). Further, in the work management system 100M-4, it is possible to use the cooperation server device 50 that provides various kinds of applications, in addition to the higher-level server device 40 that is included in the work management system 100M-3 as described above. Specifically, in the work management system 100M-4, it is possible to use, as the cooperation server device 50, an engineering application server device 50A that changes a relationship between the controllers 30 or changes a system screen of the higher-level server device 40, an apparatus maintenance application server device 50B that is able to recognize deterioration or a timing of exchange of the controller 30 from the image data of the controller 30, a control application server device 50C that enables alarm monitoring, or the like. Further, in the work management system 100M-4, the server device 10M is able to generate or convert the information model of each of the controllers 30 based on the collected device identification information.

### 4-4-2. Effect of work management system 100M-4

As described above, in the work management system 100M-4 according to the fourth modification of one embodiment, it is possible to manage cooperation of works that are performed by the plurality of workers W (W-1, W-2, ..., W-n) and the plurality of workers W. In other words, in the work management system 100M-4, it is possible to give a notice of the work instruction of the higher-level server device 40 or the cooperation server device 50, so that, by causing each of the workers W to perform a work in accordance with the work instruction, the workers W can cooperate with each other. For example, in the work management system 100M-4, by causing the plurality of work terminals 20M (20M-1, 20M-2, ..., 20M-n) to directly exchange data, it is possible to perform cooperation for adjusting a priority of operation or an operation timing. Therefore, the work management system 100M-4 is able to manage the increased number of controllers 30 as compared to the work management system 100, so that it is possible to more effectively connect pieces of information on apparatuses without physically modifying the apparatuses to connect each of the apparatuses to a network.

### 4-5. Application examples of one embodiment

Application examples of one embodiment will be described below. In the following, a first application example to a seventh application example will be described. Meanwhile, the first application example to the seventh application example of one embodiment are applicable to the first modification to the fourth modification of one embodiment as described above.

### 4-5-1. First application example

As the first application example of one embodiment, it is possible to display, on the work instruction screen of the worker terminal 20 or the like, information on data (golden batch or the like) that was excellent during past production or a trend in a superimposed manner in addition to the work instruction.

### 4-5-2. Second application example

As the second application example of one embodiment, when the worker terminal 20 or the like acquires the location data of the worker W, it is possible to keep a record of movement of the worker W between the different controllers 30; therefore, by using this data, it is possible to perform scheduling to optimize a movement route when the plurality of workers W perform works.

### 4-5-3. Third application example

As the third application example of one embodiment, when the worker terminal 20 or the like acquires the location data of the worker W, it is possible to suggest a traffic flow of the worker to give a higher priority to health, rather than time, as a purpose of optimization. For example, it is possible to suggest a traffic flow to a certain person, for whom a lack of exercise is pointed out from the health perspective, such that an appropriate physical activity can be ensured.

### 4-5-4. Fourth application example

As the fourth application example of one embodiment, the technology is applicable to, as the worker W, a robot other than a human being.

### 4-5-5. Fifth application example

As the fifth application example of one embodiment, when the worker W and the worker terminal 20 are associated with each other by an access right or the like and an image of the operation panel P is captured, and if the captured operation panel P is not responsible for the worker W who carries the worker terminal 20, it is possible to output warning display on the worker terminal 20.

### 4-5-6. Sixth application example

As the sixth application example of one embodiment, when the plurality of workers W concurrently perform works in a single production line and the works need to be performed in order, it is possible to display an execution timing of each of the works on the worker terminal 20.

### 4-5-7. Seventh application example

As the seventh application example of one embodiment, it is possible to arrange the camera C on a robot or the like that moves automatically, automatically capture an image of the operation panel P of the operation screen of each of the controllers 30, and call the worker W who is present nearby only when treatment is needed.

### 5. Effects of one embodiment

Effects of one embodiment will be described below. First effects to fourteenth effects of the processes according to one embodiment will be described below.

### 5-1. First effect

Firstly, in one process according to one embodiment as described above, the server device 10 acquires operation data for identifying operation that is performed on the controller 30 by the worker W in accordance with a work instruction on a predetermined work process related to the operation device that is operated by the worker, analyzes the operation data, determines a notification content for the worker W, and notifies the worker W of the determined notification content. Therefore, in this process, it is possible to notify the worker W of the notification content in accordance with the operation that is performed on the controller 30 that is not connected to the network, so that it is possible to more effectively connect pieces of information on apparatuses without physically modifying the apparatuses to connect each of the apparatuses to a network.

### 5-2. Second effect

Secondly, in one process according to one embodiment as described above, the server device 10 acquires, as the operation data, image data for identifying a state of the operation screen of the controller 30, and determines appropriateness of the operation that is performed on the controller 30 by the worker W by using the acquired image data. Therefore, in this process, it is possible to determine the appropriateness of the work that is performed by the worker W by using the image data without changing the controller 30 that is not connected to the network, so that it is possible to more effectively connect pieces of information on apparatuses without physically modifying the apparatuses to connect each of the apparatuses to a network.

### 5-3. Third effect

Thirdly, in one process according to one embodiment as described above, the server device 10 further acquires, as the operation data, eye-tracking data for identifying a line of sight of the worker W with respect to the operation screen of the controller 30, and determines appropriateness of operation that is performed on the controller 30 by the worker W by using the acquired image data and the acquired eye-tracking data. Therefore, in this process, it is possible to determine the appropriateness of the work that is performed by the worker W by using the image data and the eye-tracking data without changing the controller 30 that is not connected to the network, so that it is possible to more effectively connect pieces of information on apparatuses without physically modifying the apparatuses to connect each of the apparatuses to a network.

### 5-4. Fourth effect

Fourthly, in one process according to one embodiment as described above, the server device 10 acquires, as the operation data, image data for identifying a state of the operation screen of the controller 30, and records characters in the operation screen that is viewed by the worker W by using the acquired image data. Therefore, in this process, it is possible to digitalize data of the work that is performed by the worker W by using the image data without changing the controller 30 that is not connected to the network, so that it is possible to more effectively connect pieces of information on apparatuses without physically modifying the apparatuses to connect each of the apparatuses to a network.

### 5-5. Fifth effect

Fifthly, in one process according to one embodiment as described above, the server device 10 further acquires, as the operation data, eye-tracking data for identifying a line of sight of the worker W with respect to the operation screen of the controller 30, and records characters in the operation screen that is viewed by the worker W by using the acquired image data and the acquired eye-tracking data. Therefore, in this process, it is possible to digitalize data of the work that is performed by the worker W by using the image data and the eye-tracking data without changing the controller 30 that is not connected to the network, so that it is possible to more effectively connect pieces of information on apparatuses without physically modifying the apparatuses to connect each of the apparatuses to a network.

### 5-6. Sixth effect

Sixthly, in one process according to one embodiment as described above, the server device 10 notifies the worker W of, as the work instruction, operation for performing each of work processes that are generated from the SOP. Therefore, in this process, it is possible to give a notice of the work instruction to be executed by the worker W based on the SOP in a production facility or the like in which a work content, such as batch, is frequently changed, so that it is possible to more effectively connect pieces of information on apparatuses without physically modifying the apparatuses to connect each of the apparatuses to a network, which makes it possible to notify the worker of a correct work content and prevent incorrect operation.

### 5-7. Seventh effect

Seventhly, in one process according to one embodiment as described above, the server device 10 determines, as the notification content, a work instruction on a next work process of the predetermined work process, an error message for operation that is performed by the worker W, or a change of a work instruction on the predetermined work process. Therefore, in this process, it is possible to give a notice of the work instruction to be executed by the worker W in each of the work processes, so that it is possible to more effectively connect pieces of information on apparatuses without physically modifying the apparatuses to connect each of the apparatuses to a network, which makes it possible to give an instruction on correct operation to the worker W in a work site.

### 5-8. Eighth effect

Eighthly, in one process according to one embodiment as described above, when all of work processes performed by the worker W are completed, the server device 10 generates a work report in which a work content for the worker W related to the controller 30 is recorded. Therefore, in this process, it is possible to automatically generate the work report every time a series of works is completed, so that it is possible to more effectively connect pieces of information on apparatuses without physically modifying the apparatuses to connect each of the apparatuses to a network, which makes it possible to automatically record a content, which has been manually recorded in a note or a work report, in the server device 10 without bothering the worker W and prevent mistakes due to erroneous description.

### 5-9. Ninth effect

Ninthly, in one process according to one embodiment as described above, the server device 10 gives a notice of a work instruction via the worker terminal 20 that is carried by the worker W, and acquires the image data that is captured by the camera C that is arranged at a position at which an image of the operation screen of the controller 30 is capturable and the eye-tracking data that is detected by the eye-tracking sensor S that is arranged at a position at which a line of sight of the worker W who operates the controller 30 is detectable. Therefore, in this process, it is possible to analyze the operation that is performed by the worker W based on the operation data that is acquired from the camera C and the eye-tracking sensor S that are arranged at the controller 30, so that it is possible to more effectively connect pieces of information on apparatuses without physically modifying the apparatuses to connect each of the apparatuses to a network.

### 5-10. Tenth effect

Tenthly, in one process according to the first modification of one embodiment as described above, the server device 10 gives a notice of the work instruction via the smart glasses G that is worn on the worker W, and acquires the image data that is captured by the smart glasses G and the eye-tracking data that is detected by the smart glasses G. Therefore, in this process, it is possible to analyze the operation that is performed by the worker W based on the operation data that is acquired from the smart glasses G, so that it is possible to more effectively connect pieces of information on apparatuses without physically modifying the apparatuses to connect each of the apparatuses to a network.

### 5-11. Eleventh effect

Eleventhly, in one process according to the second modification of one embodiment as described above, the server device 10 gives a notice of the work instruction via the worker terminal 20 that is carried by the worker W, and acquires the image data that is captured by the worker terminal 20. Therefore, in this process, it is possible to analyze the operation that is performed by the worker W based on the operation data that is acquired from the worker terminal 20 that is carried by the worker W, so that it is possible to more effectively connect pieces of information on apparatuses without physically modifying the apparatuses to connect each of the apparatuses to a network.

### 5-12. Twelfth effect

Twelfthly, in one process according to the third modification of one embodiment as described above, the server device 10 acquires device identification information for identifying the controller 30, and generates a model that enables data translation related to the controller 30 that is identified by using the device identification information. Therefore, in this process, with use of the information model between a plurality of apparatuses or servers that use different expressions, it is possible to exchange information without recognizing a counterparty, so that it is possible to more effectively connect pieces of information on apparatuses without physically modifying the apparatuses to connect each of the apparatuses to a network.

### 5-13. Thirteenth effect

Thirteenthly, in one process according to the fourth modification of one embodiment as described above, the server device 10 notifies the worker W of a work instruction that is transmitted by the higher-level server device 40 that manage the plurality of controllers 30. Therefore, in this process, it is possible to analyze cooperation among the plurality of workers W, so that it is possible to more effectively connect pieces of information on apparatuses without physically modifying the apparatuses to connect each of the apparatuses to a network.

### 5-14. Fourteenthly effect

Fourteenthly, in the first application example of one embodiment as described above, the server device 10 notifies the worker W of a history of operation that is selected as best operation among operation that is performed in the past on the controller 30. Therefore, in this process, it is possible to refer to information, such as golden batch, and change to an appropriate state based on determination made by the worker W, so that it is possible to more effectively connect pieces of information on apparatuses without physically modifying the apparatuses to connect each of the apparatuses to a network.

### System

The processing procedures, control procedures, specific names, and information including various kinds of data and parameters illustrated in the above-described document and drawings may be arbitrarily changed unless otherwise specified.

Further, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Furthermore, all or an arbitrary part of processing functions that are implemented by the apparatuses may be realized by a CPU and a program analyzed and executed by the CPU, or may be realized by hardware using wired logic.

### Hardware

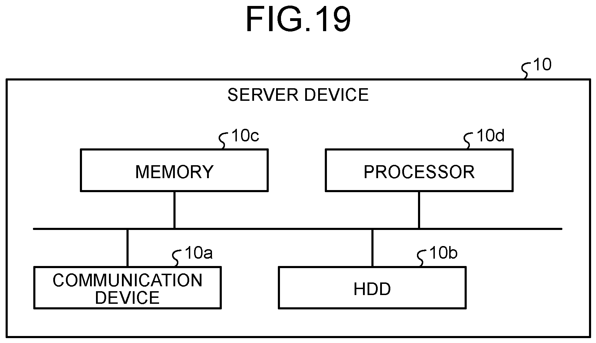

A hardware configuration examples of the server device 10 that is an information providing apparatus will be described below. Meanwhile, the other apparatuses may have the same hardware configurations. FIG. 19 is a diagram illustrating a hardware configuration example according to one embodiment. As illustrated in FIG. 19, the server device 10 includes a communication device 10a, a Hard Disk Drive (HDD) 10b, a memory 10c, and a processor 10d. Meanwhile, all of the units illustrated in FIG. 19 are connected to one another via a bus or the like.

The communication device 10a is a network interface card or the like and performs communication with a different server. The HDD 10b stores therein a program or a database for implementing the functions illustrated in FIG. 2.

The processor 10d reads a program that executes the same processes as those of each of the processing units illustrated in FIG. 2 from the HDD 10b or the like, loads the programs onto the memory 10c, and operates the processes for implementing each of the functions as described above with reference to FIG. 2 or other figures. For example, the process as described above implements the same functions as those of the processing units included in the server device 10. Specifically, the processor 10d reads, from the HDD 10b or the like, programs that have the same functions as those of the notification unit 15a, the acquisition unit 15b, the analysis unit 15c, the generation unit 15d, and the like. Further, the processor 10d performs processes that implement the same processes as those of the notification unit 15a, the acquisition unit 15b, the analysis unit 15c, the generation unit 15d, and the like.

In this manner, by reading and executing the program, the server device 10 operates as an apparatus that implements various kinds of processing methods. Further, the server device 10 may be able to implement the same functions as those of the embodiments as described above by causing a medium reading apparatus to read the above-described program from a recording medium and executing the read program. Meanwhile, program described in this embodiment need not always be executed by the server device 10. For example, the present invention may be applied in the same manner to a case in which a different computer or a server executes the program and a case in which the different computer and the server execute the program in a cooperative manner.

The program as described above may be distributed via a network, such as the Internet. Further, the program as described above may be recorded in a computer readable recording medium, such as a hard disk, a flexible disk (FD), a compact disk read only memory (CD-ROM), a Magneto-Optical disk (MO), a Solid State Drive (SSD), or a Digital Versatile Disc (DVD), and may be executed by being read from the recording medium by a computer. Furthermore, the program as described above may be downloaded in a storage area that is included in the worker terminal 20.

According to the present invention, it is possible to connect pieces of information on apparatuses without physically modifying the apparatuses to connect each of the apparatuses to a network.

## Claims

1. An information providing apparatus (10) comprising:
an acquisition unit (15b) that acquires operation data for identifying operation that is performed on an operation device (30) by a worker (W) in accordance with a work instruction on a predetermined work process related to the operation device (30) that is operated by the worker (W);
an analysis unit (15c) that analyzes the operation data and determines a notification content for the worker (W); and
a notification unit (15a) that notifies the worker (W) of the determined notification content.

2. The information providing apparatus (10) according to claim 1, wherein
the acquisition unit (15b) acquires, as the operation data, image data for identifying a state of an operation screen of the operation device (30), and
the analysis unit (15c) determines appropriateness of operation that is performed on the operation device (30) by the worker (W) by using the image data.

3. The information providing apparatus (10) according to claim 2, wherein
the acquisition unit (15b) further acquires, as the operation data, eye-tracking data for identifying a line of sight of the worker (W) with respect to the operation screen, and
the analysis unit (15c) determines appropriateness of operation that is performed on the operation device (30) by the worker by using the image data and the eye-tracking data.

4. The information providing apparatus (10) according to any one of claims 1 to 3, wherein
the acquisition unit (15b) acquires, as the operation data, image data for identifying a state of an operation screen of the operation device (30), and
the analysis unit (15c) records characters in the operation screen that is viewed by the worker (W) by using the image data.

5. The information providing apparatus (10) according to claim 4, wherein
the acquisition unit (15b) further acquires, as the operation data, eye-tracking data for identifying a line of sight of the worker with respect to the operation screen, and
the analysis unit (15c) records characters in the operation screen that is viewed by the worker (W) by using the image data and the eye-tracking data.

6. The information providing apparatus (10) according to any one of claims 1 to 5, wherein the notification unit (15a) notifies the worker of, as the work instruction, operation for performing each of work processes that are generated from a standard operation procedure.

7. The information providing apparatus (10) according to any one of claims 1 to 6, wherein the analysis unit (15b) determines, as the notification content, one of work instructions on a next work process in the predetermined work process, an error message for operation that is performed by the worker (W), and a change of a work instruction on the predetermined work process.

8. The information providing apparatus (10) according to any one of claims 1 to 7, further comprising:
a generation unit (15d) that generates, when all of work processes performed by the worker are completed, a work report in which a work content for the worker related to the operation device (30) is recorded.

9. The information providing apparatus (10) according to claim 3 or 5, wherein
the notification unit (15a) gives a notice of the work instruction via a worker terminal (20) that is carried by the worker (W), and
the acquisition unit (15b) acquires the image data that is captured by an image capturing device (C) that is arranged at a position at which an image of the operation screen of the operation device (30) is capturable and the eye-tracking data that is detected by a sensor device (S) that is arranged at a position at which a line of sight of the worker (W) who operates the operation device (30) is detectable.

10. The information providing apparatus (10) according to claim 3 or 5, wherein
the notification unit (15a) gives a notice of the work instruction via a wearable device that is worn on the worker (W), and
the acquisition unit (15b) acquires the image data that is captured by the wearable device (G) and the eye-tracking data that is detected by the wearable device (G).

11. The information providing apparatus (10) according to claim 2 or 4, wherein
the notification unit (15a) gives a notice of the work instruction via a worker terminal (20) that is carried by the worker (W), and
the acquisition unit (15b) acquires the image data that is captured by the worker terminal (20).

12. The information providing apparatus (10) according to any one of claims 1 to 11, wherein
the acquisition unit (15b) acquires device identification information for identifying the operation device (30), and
the analysis unit (15c) generates a model that enables data translation related to the operation device (30) that is identified by using the device identification information.

13. The information providing apparatus (10) according to any one of claims 1 to 12, wherein the notification unit (15a) notifies the worker (W) of the work instruction that is transmitted by a management apparatus that manages a plurality of operation devices (30).

14. The information providing apparatus (10) according to any one of claims 1 to 13, wherein the notification unit (15a) notifies the worker (W) of a history of operation that is selected as best operation among operation that is performed in a past on the operation device (30).

15. An information providing method that is implemented by a computer (10), the information providing method comprising:
acquiring operation data for identifying operation that is performed on an operation device (30) by a worker (W) in accordance with a work instruction on a predetermined work process related to the operation device (30) that is operated by the worker (W);
analyzing the operation data;
determining a notification content for the worker (W); and
notifying the worker (W) of the determined notification content.

16. An information providing program that causes a computer (10) to execute a process, the process comprising:
acquiring operation data for identifying operation that is performed on an operation device (30) by a worker (W) in accordance with a work instruction on a predetermined work process related to the operation device (30) that is operated by the worker (W);
analyzing the operation data;
determining a notification content for the worker (W); and
notifying the worker (W) of the determined notification content.
